(19) Europäisches Patentamt European Patent Office Office européen des brevets

(11) **EP 4 711 159 A1**

(12) **EUROPÄISCHE PATENTANMELDUNG**

(43) Veröffentlichungstag:
   **18.03.2026 Patentblatt 2026/12**

(21) Anmeldenummer: **24199822.8**

(22) Anmeldetag: **11.09.2024**

(51) Internationale Patentklassifikation (IPC):
   **B60H 1/00** (2006.01)

(52) Gemeinsame Patentklassifikation (CPC):
   **B60H 1/00428; B60H 1/00828; B60H 1/3232**

(84) Benannte Vertragsstaaten:
   **AL AT BE BG CH CY CZ DE DK EE ES FI FR GB GR HR HU IE IS IT LI LT LU LV MC ME MK MT NL NO PL PT RO RS SE SI SK SM TR**
   Benannte Erstreckungsstaaten:
   **BA**
   Benannte Validierungsstaaten:
   **GE KH MA MD TN**

(71) Anmelder: **Schmitz Cargobull AG**
   **48341 Altenberge (DE)**

(72) Erfinder:
   • **SCHMITZ, Andreas**
     **48161 Münster (DE)**

   • **FLACKE, Norbert, Dr.-Ing.**
     **45894 Gelsenkirchen (DE)**
   • **RÜBIG, Michael**
     **77830 Bühlertal (DE)**
   • **WANTIA, Sebastian**
     **48691 Vreden (DE)**

(74) Vertreter: **Cohausz & Florack**
   **Patent- & Rechtsanwälte**
   **Partnerschaftsgesellschaft mbB**
   **Bleichstraße 14**
   **40211 Düsseldorf (DE)**

(54) **STRASSENNUTZFAHRZEUG UMFASSEND EINE TRANSPORTKÄLTEMASCHINE**

(57) Es wird ein Straßennutzfahrzeug offenbart umfassend eine Transportkältemaschine mit zumindest einem Lüfter, welcher in einem in einem Hilfsbetriebsmodus von einer 48V-Hilfsenergiequelle versorgt wird.

Fig.1

## Beschreibung

### Gebiet

Die Erfindung betrifft ein Straßennutzfahrzeug umfassend eine Transportkältemaschine, insbesondere eine Transportkältemaschine zum Temperieren, insbesondere Kühlen und/oder Heizen, eines Laderaums des Straßennutzfahrzeugs.

### Hintergrund

Eine solche Transportkältemaschine kann beispielsweise gekühlte Luft oder gewärmte Luft erzeugen, die in den Laderaum des Straßennutzfahrzeugs geblasen wird, insbesondere in dem Laderaum zirkuliert. Zu diesem Zweck kann die Transportkältemaschine zumindest ein Heizelement und/oder einen Heizkreis und/oder Kühlkreis umfassen. Der Kühlkreis kann einen durch einen elektrischen Motor angetriebenen Verdichter zum Verdichten eines Kühlmittels, einen Kondensator, eine Drosseleinrichtung und einen Wärmetauscher umfassen. In dem Kühlkreis strömt, bei einem kühlenden Betrieb, das von dem Verdichter verdichtete Kältemittel über den Kondensator und eine in Strömungsrichtung hinter dem Kondensator angeordnete Drosseleinrichtung, die beispielsweise als Stellventil ausgebildet sein kann, zu dem Wärmetauscher. In dem Wärmetauscher wird das zuvor verflüssigte Kältemittel expandiert und entzieht dabei einem getrennt von dem Kältemittel durch den Wärmetauscher geleiteten Luftstrom Wärme, so dass die Luft des Luftstroms gekühlt wird. Die gekühlte Luft dieses Luftstroms wird anschließend in den Laderaum des Straßennutzfahrzeugs (zurück-) geblasen, um diesen zu kühlen.

Häufig wird der elektrische Motor einer solchen Transportkältemaschine von der Hochspannungs-Energiequelle wie beispielsweise einem Generator (welcher beispielsweise in einem optimalen Betriebspunkt laufenden Verbrennungsmotor angetrieben wird), mit elektrischer Energie versorgt. Eine Hochvolt-Energiequelle kann auch ein Energiespeicher sein wie z.B. eine Hochvoltbatterie (beispielsweise einschließlich eines Gleichspannungs-zu-Wechselspannungs-Wandlers (DC/AC-Wandlers)). Ein Vorteil einer Hochspannungs-Energiequelle, insbesondere von einem per Verbrennungsmotor angetriebenen Generators, ist unter anderem, dass diese hohe Momentanleistungen bereitstellen kann, wie sie für den Betrieb einer Transportkältemaschine notwendig sind. Ein Nachteil ist allerdings, dass hier Hochspannungs-Energiequelle, insbesondere ein Verbrennungsmotor, welcher den Generator antreibt, keine beliebig geringe Leistung bereitstellen kann und beispielsweise mehr Leistung produziert als von der Transportkältemaschine augenblicklich benötigt wird. Weiterhin kann ein Verbrennungsmotor unter Umständen keine beliebig hohe Leistung bereitstellen, beispielsweise aufgrund von Abgasgrenzwerten und/oder maximal zumutbarer Lärmentwicklung.

### Zusammenfassung einiger beispielhafter Ausführungsformen der Erfindung

Es wurde erkannt, dass es vorteilhaft ist, eine Versorgung der Transportkältemaschine mittels zumindest einer weiteren Energiequelle über den Generator hinaus zu ermöglichen, insbesondere während eines Fahrbetriebs des Straßennutzfahrzeugs. Eine weitere Energiequelle könnte beispielsweise in Zeiten besonders hoher Belastung eine (beispielsweise nah an ihrer Leistungsgrenze arbeitenden) Hochspannungs-Energiequelle unterstützen und/oder in Zeiten niedriger Belastung alternativ zu der Hochvolt-Energiequelle (z.B. Generator oder Hochvolt-Akkumulator) zum (z.B. temporären) Betreiben der Transportkältemaschine (insbesondere Teilen der Transportkältemaschine) genutzt werden und/oder zur Optimierung eines Arbeitspunkts der Hochspannungs-Energiequelle.

Als eine erste Option einer solchen weiteren Energiequelle wurde ein Energiespeicher erkannt. Ein Energiespeicher kann insbesondere als ein elektrochemischer Energiespeicher wie ein wiederaufladbarer Akkumulator ausgeführt sein. Unter anderem wurde erkannt, dass ein Energiespeicher elektrische Energie zeitversetzt aufnehmen und wieder abgeben kann und durch diese Eigenschaft ein Arbeitspunkt der Hochvolt-Energiequelle optimiert werden kann sowie eine temporäre Unterstützung oder ein temporärer Ersatz der Hochspannungs-Energiequelle ermöglicht wird.

Als eine weitere Option einer solchen weiteren Energiequelle wurden Solarpanele erkannt. Insbesondere wurde erkannt, dass eine hohe Leistungsaufnahme der Transportkältemaschine dann auftreten kann, wenn das Straßennutzfahrzeug starker Sonneneinstrahlung ausgesetzt ist. Auch wurde erkannt, das Solarpanele ökologisch und wirtschaftlich attraktiv sein können, da vorhandene Sonnenergie mit mittlerweile kostengünstigen Solarmodulen verlässlich in elektrische Energie überführt werden kann.

Ferner wurde jedoch auch erkannt, dass eine direkte Versorgung von Komponenten, welche üblicherweise von der Hochspannungs-Energiequelle angetrieben werden (insbesondere Kühlkomponenten wie ein Kompressor, typischerweise betrieben mit 400V Dreiphasenwechselspannung) mittels einer Hilfsenergiequelle kostenintensive hochspannungskompatible Bauteile (z.B. Gleichspannungswandler, Schalter und/oder Kombinationen hieraus) und/oder Umtransformationen der Spannung erfordern kann, welche unwirtschaftlich sein kann.

Eine Aufgabe der vorliegenden Erfindung ist es daher, ein Straßennutzfahrzeug umfassend eine Transportkältemaschine auszugestalten und weiterzubilden, um mit möglichst geringem Aufwand kostengünstige weitere Energiequellen für die Transportkältemaschine zu erschließen.

Gemäß einem ersten beispielhaften Aspekt wird ein Straßennutzfahrzeug vorgeschlagen, umfassend

- eine Transportkältemaschine umfassend:

    (i) zumindest einen Lüfter (z.B. einen Verdampferlüfter, Kondensatorlüfter und/oder Motorraumlüfter), wobei der zumindest eine Lüfter dazu eingerichtet ist, in einem 48V-Spannungsband mit elektrischer Energie betrieben zu werden (z.B. über einen DC/AC-Wandler, welcher dazu eingerichtet ist, 48V DC in eine Wechselspannung für den Lüfter zu wandeln; z.B. ist der DC/AC-Wandler Teil des Lüfters),

    (ii) zumindest eine temperaturbeeinflussende Komponente (z.B. kälteerzeugend, z.B. Teil eines Kältemittelkreislaufs, z.B. Kompressor und/oder wärmeerzeugend, z.B. Heizstab), eingerichtet zur Temperierung eines Frachtraums des Straßennutzfahrzeugs, wobei die zumindest eine temperaturbeeinflussende Komponente dazu eingerichtet ist, in einem Hochspannungsband mit elektrischer Energie versorgt zu werden,

    (iii) eine Hochspannungs-Energiequelle (z.B. 400V AC; z.B. Generator/HV-Akkumulator), wobei die Hochspannungs-Energiequelle dazu eingerichtet ist, (z.B. zeitweise, z.B. in zumindest einem Betriebsmodus der Transportkältemaschine und/oder des Straßennutzfahrzeugs) zumindest eines der (z.B. und zumindest phasenweise beide der) zumindest einen temperaturbeeinflussenden Komponente der Transportkältemaschine und des zumindest einen Lüfters mit elektrischer Energie zu versorgen,

- eine 48V-Hilfsenergiequelle (z.B. Solarmodul, z.B. umfassend zumindest einen oder mehrere Spannungswandler und/oder einen elektrischen Energiespeicher, z.B. Akkumulator), wobei die 48V-Hilfsenergiequelle dazu eingerichtet ist, in dem 48V-Spannungsband elektrische Energie mit einer (z.B. zeitlich variablen) Hilfsleistung bereitzustellen, wobei die 48V-Hilfsenergiequelle dazu eingerichtet ist, zumindest einen der zumindest einen Lüfter (z.B. (nur) den Verdampferlüfter oder den Verdampferlüfter und zumindest einen der Kondensatorlüfter oder Motorraumlüfter) mit elektrischer Energie zu versorgen,
- wobei das Straßennutzfahrzeug (und/oder die Transportkältemaschine) dazu eingerichtet ist, die zumindest eine temperaturbeeinflussende Komponente frei von einer elektrischen Energieversorgung durch die 48V-Hilfsenergiequelle (und/oder aus dem 48V-Spannungsband) zu halten (z.B. unidirektionaler Wandler und/oder anderes Spannungsband, und/oder AC vs DC),
- wobei das Straßennutzfahrzeug dazu eingerichtet ist, in einem Hilfsbetriebsmodus zumindest einen der zumindest einen Lüfter zumindest teilweise (z.B. zusätzlich zu einer Versorgung ausgehend von der Hochspannungs-Energiequelle) ausgehend von der 48V-Hilfsenergiequelle mit elektrischer Energie zu versorgen (z.B. und/oder elektrische Leistung aus der 48V-Hilfsenergiequelle in das 48V-Spannungsband einzuspeisen).

Das offenbarte Straßennutzfahrzeug ist zum Beispiel ein Lastkraftwagen, ein Anhänger oder ein Sattelauflieger. Straßennutzfahrzeuge sind insbesondere für den Transport von Gütern, vorzugsweise Stückgütern, im öffentlichen Straßenverkehr vorgesehen. Das Straßennutzfahrzeug ist insbesondere ein bereiftes Straßennutzfahrzeug, welche auf mit Gas gefüllten Reifen fährt. Zu diesem Zweck weisen die Straßennutzfahrzeuge unterschiedliche Arten von Nutzfahrzeugaufbauten auf, welche der Aufnahme der zu transportierenden Güter in einem Innenraum, insbesondere einem Laderaum, dienen. So sind beispielsweise Kofferaufbauten mit festen Seitenwänden und einem festen Dach bekannt, welche den Innenraum umschließen. Da die Kofferaufbauten geschlossen sind, sind Kofferaufbauten in besonderem Maße für den Transport von temperaturempfindlichen Gütern, also beispielsweise für den sogenannten Kühltransport geeignet. Damit die Temperatur solcher temperaturempfindlichen Güter einen von den Gütern abhängigen Grenzwert während eines solchen Kühltransports nicht übersteigt, wird der Innenraum (Laderaum) des Straßennutzfahrzeugs gekühlt.

Wenn hier, im Folgenden und/oder Vorangehenden offenbart wird, dass das Straßennutzfahrzeug etwas tut und/oder dazu eingerichtet ist, etwas zu tun, z.B. Verfahrensschritte ausführt, ist damit insbesondere gemeint, dass eine zu dem Straßennutzfahrzeug gehörige Steuervorrichtung, z.B. eine Telematikeinheit und/oder eine Steuereinheit (z.B. des Straßennutzfahrzeugs und/oder der Transportkältemaschine), die entsprechenden Schritte steuert und/oder ausführt.

Das offenbarte Straßennutzfahrzeug umfasst ferner eine Transportkältemaschine.

Die Transportkältemaschine kann Teil des Straßennutzfahrzeugs sein, z.B. in und/oder an einem Kofferaufbau des Straßennutzfahrzeugs montiert sein.

Die Transportkältemaschine ist insbesondere zum Temperieren, also Kühlen und/oder Heizen eines Innenraums, beispielsweise des Laderaums, des Straßennutzfahrzeugs vorgesehen und/oder eingerichtet und/oder konfiguriert. Zu diesem Zweck kann die Transportkältemaschine einen Kühlkreis umfassend einen Verdichter (z.B. Kompressor) zum Verdichten eines Kühlmittels, einen Kondensator, eine Drosseleinrichtung und einen Wärmetauscher (Verdampfer) umfassen. Zum Beispiel kann das Kühlen des Innenraums, insbesondere des Laderaums, des Straßennutzfahrzeugs durch die Transportkältemaschine erfolgen, indem die Transportkältemaschine Luft des Laderaums ansaugt, durch den Wärmetauscher (Verdampfer) leitet und dort Wärme entzieht und anschließend die Luft in den Laderaum Straßennutzfahrzeugs (zurück-)bläst. Auch kann (beispielsweise im Bereich des Wärmetauschers) zumindest ein Heizelement angeordnet sein. Hierdurch kann die Transportkältemaschine der angesaugten Luft auch Wärme hinzufügen, diese also aufwärmen.

Die Transportkältemaschine umfasst zumindest einen Lüfter.

Der Lüfter kann beispielsweise dem Transport von Luft hin zu und/oder weg von dem Wärmetauscher dienen. Auch kann der Lüfter dazu dienen, Luft des Innenraums des Straßennutzfahrzeugs zu der Transportkältemaschine, insbesondere zu deren Wärmetauscher zu transportieren. Auch kann der Lüfter beispielsweise dazu dienen, temperierte Luft ausgehend von dem Wärmetauscher (z.B. zurück) in den Innenraum zu transportieren. Der Lüfter kann somit eine Zirkulation von Innenluft in dem Innenraum des Transportfahrzeugs bewirken, insbesondere einen Wärmeaustausch zwischen Wärmetauscher und Luft und somit konvektiven Wärmetransport in dem Straßennutzfahrzeug ermöglichen und/oder begünstigen. Der Lüfter kann beispielsweise auch dazu eingerichtet sein, zumindest einen Teil der Transportkältemaschine, beispielsweise eine Hochspannungs-Energiequelle (z.B. Motor mit Generator und/oder Hochspannungs-Energiespeicher) und/oder Kompressor der Transportkältemaschine, zu kühlen.

Lüfter werden anmeldungsgemäß nicht als temperaturbeeinflussende Komponenten gefasst. Zu beachten ist jedoch, dass Lüfter einen Einfluss auf die Innenraumtemperatur haben können. Insbesondere kann ein Lüfter durch seine Verlustleistung eine Erwärmung der Luft im Innenraum bewirken.

Im Folgenden wird ein Lüfter, welcher Luft aus dem Innenraum des Straßennutzfahrzeugs ansaugt und über den Verdampfer wieder in den Innenraum führt, als Verdampferlüfter bezeichnet. Ein Verdampferlüfter kann insbesondere für eine Luftumwälzung im Innenraum des Transportfahrzeugs sorgen und/oder bei aktivierter temperaturbeeinflussender Komponente (z.B. Heizung und/oder Kühlkreislauf) die Beeinflussung der Temperatur der Innenluft durch die jeweilige temperaturbeeinflussende Komponente ermöglichen. Ferner kann der Verdampferlüfter Luft über zumindest einen Temperatursensor bewegen, sodass dieser die Lufttemperatur messen kann. Der Betrieb des Verdampferlüfters ist damit auch bei ausgeschalteten temperaturbeeinflussenden Komponenten von Relevanz - z.B. für eine Luftumwälzung im Innenraum und zur Temperaturmessung der Luft.

Ferner wird im Folgenden ein Lüfter, welcher Luft dem Kondensator zuführt, als Kondensatorlüfter bezeichnet. Der Kondensatorlüfter übernimmt primär einen Abtransport von Wärme (z.B. als heiße Luft; per Konvektion) ausgehend vom Kondensator in dessen Umgebung im Kühlbetrieb.

Auch kann ferner ein Hochspannungs-Energiequellen-Lüfter vorgesehen sein, welcher primär eine Luftkühlung der Hochspannungs-Energiequelle (z.B. Verbrennungsmotor mit Generator und/oder Hochvolt-Speicher) der Transportkältemaschine übernimmt.

Beispielsweise umfasst die Transportkältemaschine zumindest einen Verdampferlüfter, zumindest einen Kondensatorlüfter und zumindest einen Hochspannungs-Energiequellen-Lüfter.

Beispielsweise umfasst der zumindest eine Verdampferlüfter einen (z.B. einzigen Lüfter) oder zumindest 2, 3, 4, 5 oder mehr Lüfter. Beispielsweise umfasst der zumindest eine Kondensatorlüfter einen (z.B. einzigen Lüfter) oder zumindest 2, 3, 4, 5 oder mehr Lüfter. Beispielsweise umfasst der zumindest eine Hochspannungs-Energiequellen-Lüfter einen (z.B. einzigen Lüfter) oder zumindest 2, 3, 4, 5 oder mehr Lüfter.

Wenn Eigenschaften des zumindest einen Lüfters offenbart sind, sind diese Eigenschaften für alle drei Lüftertypen (Verdampferlüfter, Kondensatorlüfter und Hochspannungs-Energiequellen-Lüfter) gleichermaßen offenbart.

Zumindest einer des zumindest einen Lüfter oder der zumindest eine Lüfter ist dazu eingerichtet, in einem 48V-Spannungsband betrieben zu werden. Mit anderen Worten ist der Lüfter eingerichtet, mit einer in dem 48V-Spannungsband liegenden Spannung betrieben zu werden. Der Lüfter ist also dazu eingerichtet, elektrische Leistung in einem 48V-Spannungsband zu empfangen und die elektrische Leistung in eine Bewegung von Luft umzusetzen. Zum Beispiel können Spannungen mit einer Abweichung von 48V von bis zu 10% (d.h. 43,2V - 52,8V), 15% (d.h. 40,8V - 55,2V) oder 20% (d.h. 38,4V - 57,6V) noch als Spannungen des 48V-Spannungsbands verstanden werden. Gemäß einer beispielhaften Ausführungsform umfasst das 48V-Spannungsband Spannungen von mindestens 24V und/oder bis zu 60V. Beispielsweise weisen die Spannungen des 48V-Spannungsbandes stets einen geringeren Betrag auf als 60V.

Der Betrag einer Spannung, beispielsweise einer Spannung in einem Spannungsband, kann in den obigen Ausführungsbeispielen beispielsweise als Spitzenwert, Durchschnittswert und/oder Effektivwert bestimmt werden. "Stets" kann hier beispielsweise bedeuten, dass das jeweilige Verhältnis der Spannungen zueinander zu jedem Zeitpunkt vorliegt.

Der zumindest eine Lüfter wird insbesondere mit einer Gleichspannung betrieben. Durch den Betrieb des zumindest einen Lüfters in einem 48V-Spannungsband, insbesondere mit einer Gleichspannung, kann eine besonders hohe Energieeffizienz des Lüfters und/oder eine bessere Regelbarkeit erreicht werden, insbesondere verglichen zu einem Betrieb mit niedrigeren Spannungen, z.B. in einem 12V- oder 24V-Spannungsband oder mit einer Wechselspannung. Gleichzeitig ist ein 48V-Spannungsband ungefährlich für den Menschen und kann mit günstigen Komponenten realisiert werden.

Der zumindest eine Lüfter kann beispielsweise einen Wechselrichter aufweisen, welcher in einem 48V-Spannungsband Gleichspannung erhält und in eine Wechselspannung umwandelt, welche dem Lüfter zugeführt wird.

Ein jeweiliger Lüfter kann beispielsweise eine Leistungsaufnahme von bis zu 500W, 1kW, 1,5kW oder 2kW aufweisen. Insbesondere kann beispielsweise der zumindest eine Verdampferlüfter (z.B. aggregiert über die zumindest einen oder mehrere Verdampferlüfter) eine Leistungsaufnahme von zumindest oder höchstens 500W, 1kW, 1,5kW oder 2kW aufweisen. Beispielsweise können alle Lüfter der Transportkältemaschine eine Gesamtleistung (z.B. aggregiert über die zumindest einen oder mehrere Verdampferlüfter) von zumindest oder höchstens 1kW, 1,5kW, 2kW, 3kW, 4kW, 5kw, 6kW oder 7kW aufweisen. Diese Leistungsangaben können beispielsweise Durchschnittswerte, Minimalwerte oder Maximalwerte im laufenden Betrieb sein.

Beispielsweise kann zumindest einer der zumindest einen Lüfter, z.B. zumindest einer der oder die Verdampferlüfter, zumindest einer der oder die Kondensatorlüfter und/oder zumindest einer der oder die Hochspannungs-Energiequelle-Lüfter, in seiner Leistung variabel, insbesondere regelbar, sein oder alternativ eine im Wesentlichen konstante Leistungsaufnahme aufweisen, z.B. unregelbar.

Die Transportkältemaschine umfasst ferner zumindest eine temperaturbeeinflussende Komponente.

Eine temperaturbeeinflussende Komponente kann insbesondere eine kälteerzeugende Komponente umfassen. Beispielsweise kann die kälteerzeugende Komponente einen Motor (z.B. Elektromotor), einen Kompressor (z.B. von dem Motor angetrieben), einen Kondensator, eine Drosseleinrichtung, einen Wärmetauscher und/oder einen Verdampfer umfassen. Beispielsweise kann eine jeweilige kälteerzeugende Komponente damit einen Kühlkreislauf umfassen und/oder Teil eines Kühlkreislaufs sein.

Ferner kann die temperaturbeeinflussende Komponente eine wärmeerzeugende Komponente umfassen, z.B. einen Infrarot-Strahler und/oder einen Heizdraht.

Die Art der temperaturbeeinflussenden Komponente (wärmeerzeugend oder kälteerzeugend) wird nach ihrem Einfluss auf eine Temperatur eines Innenraums des Straßennutzfahrzeugs bestimmt. Auch wenn eine kälteerzeugende Komponente in einem Außenbereich des Straßennutzfahrzeugs Wärme erzeugt, wird sie als kälteerzeugende Komponente betrachtet, solange sie dazu eingerichtet ist, im Innenraum eine Abkühlung zu bewirken.

Die zumindest eine temperaturbeeinflussende Komponente ist insbesondere dazu eingerichtet, in einem Hochspannungsband mit elektrischer Energie versorgt zu werden. Ein Hochspannungsband kann beispielsweise eine Spannung (z.B. Wechselspannung oder Gleichspannung) von 260 - 540 V (z.B. Effektivwert, z.B. 400V Dreiphasenwechselspannung) umfassen. Insbesondere ist die temperaturbeeinflussende Komponente dazu eingerichtet, mit einer Wechselspannung betrieben zu werden, beispielsweise einer Dreiphasenwechselspannung. Falls die Hochspannungs-Energiequelle eine Hochspannungs-Akkumulator ist, kann ein Wechselrichter vorgesehen sein (z.B. von der Transportkältemaschine umfasst sein), welcher dazu eingerichtet ist, eine Gleichspannung des Hochspannungs-Akkumulator in eine Wechselspannung zur Versorgung der temperaturbeeinflussende Komponente umzuwandeln.

Die Transportkältemaschine umfasst ferner eine Hochspannungs-Energiequelle.

Die Hochspannungs-Energiequelle ist dazu eingerichtet, die zumindest eine temperaturbeeinflussende Komponente der Transportkältemaschine und/oder den zumindest einen Lüfter mit elektrischer Energie zu versorgen.

Beispielsweise kann die Hochspannungs-Energiequelle, die Transportkältemaschine und/oder das Straßennutzfahrzeug dazu eingerichtet sein, zu einem gegebenen Zeitpunkt aus der Hochspannungs-Energiequelle entweder (1) sowohl die zumindest eine temperaturbeeinflussende Komponente und den zumindest einen Lüfter mit elektrischer Energie zu versorgen, oder (2) die zumindest eine temperaturbeeinflussende Komponente, nicht jedoch den zumindest einen Lüfter mit elektrischer Energie zu versorgen oder (3) nicht die zumindest eine temperaturbeeinflussende Komponente, jedoch den zumindest einen Lüfter mit elektrischer Energie zu versorgen.

Die Hochspannungs-Energiequelle kann einen elektrischen Generator umfassen. Der elektrische Generator ist beispielsweise Teil des Straßennutzfahrzeugs. Der Generator kann beispielsweise von einem Verbrennungsmotor angetrieben werden, beispielsweise einem Diesel- und/oder Benzinmotor. In einem Beispiel kann die Energiequelle als ein Dieselgenerator ausgebildet sein. Der Dieselgenerator kann ein Teil der Transportkältemaschine sein.

Der Generator stellt eine Wechselspannung bereit. Die durch den Generator bereitgestellte Wechselspannung ist beispielsweise eine Einphasenwechselspannung oder eine mehrphasige, insbesondere eine dreiphasige Wechselspannung, insbesondere eine 400V Dreiphasenwechselspannung.

Die elektrische Hochspannungs-Energiequelle kann beispielsweise alternativ oder zusätzlich einen Hochspannungs-Akkumulator (auch Hochspannungsbatterie, HochvoltBatterie) umfassen.

Der Hochspannungs-Akkumulator kann der Transportkältemaschine zugeordnet sein. Beispielsweise kann der Hochspannungs-Akkumulator dazu eingerichtet sein (z.B. ausschließlich) die Transportkältemaschine mit elektrischer Energie zu versorgen. Auch kann der Hochspannungs-Akkumulator beispielsweise alternativ oder zusätzlich dem Straßennutzfahrzeugs (z.B. Trailer) zugeordnet sein und zumindest eine weitere Komponente des Straßennutzfahrzeugs (beispielsweise eine Telematikeinheit) mit elektrischer Energie zu versorgen. Auch kann der Hochspannungs-Akkumulator beispielsweise alternativ oder zusätzlich dazu eingerichtet sein, einen Antriebsstrang des Straßennutzfahrzeugs mit elektrischer Energie zu versorgen. Die Hochspannungs-Energiequelle ist dazu eingerichtet, zumindest Teile der oder die Transportkältemaschine mit elektrischer Energie zu versorgen.

Der Hochspannungs-Akkumulator kann beispielsweise eine Gleichspannung bereitstellen, beispielsweise eine Gleichspannung von zumindest 100V, 200V, 300V, 400V, 500V, 600V, 800V, 1000V, 1,5kV, 2kV oder mehr.

Die Hochspannungs-Energiequelle kann auch weitere Komponenten umfassen, beispielsweise einen Gleichrichter und/oder Komponenten zur Kompensation von Spannungsschwankungen wie ein Filter (z.B. umfassend Spulen und/oder Kondensatoren und/oder Kombinationen hieraus).

Die Hochspannungs-Energiequelle kann beispielsweise elektrische Gleichspannung und/oder einphasige oder mehrphasige Wechselspannung bereitstellen. Beispielsweise kann die Hochspannungs-Energiequelle dazu eingerichtet sein, eine mehrphasige Wechselspannung bereitzustellen, insbesondere dreiphasige Wechselspannung. Insbesondere kann eine dreiphasige Wechselspannung mit einer Spannung in Höhe von 260V bis 540 V (z.B. 400 V) (Effektivwert der verketteten Spannungen) von der elektrischen Hochspannungs-Energiequelle bereitgestellt werden. Auch kann die elektrische Hochspannungs-Energiequelle eine Gleichspannung bereitstellen, beispielsweise eine Gleichspannung von zumindest 100V, 200V, 300V, 400V, 500V, 600V, 800V, 1000V, 1,5kV, 2kV oder mehr.

Die Transportkältemaschine kann beispielsweise zumindest eine Komponente, insbesondere zumindest eine temperaturbeeinflussende Komponente, aufweisen, welche mit dreiphasiger Wechselspannung in einem Hochspannungsband betrieben wird. Insbesondere kann hierfür eine dreiphasige Wechselspannung mit einer Spannung in dem Hochspannungsband in Höhe von 260V bis 540 V (z.B. 400 V) (Effektivwert der verketteten Spannungen) notwendig sein. Insbesondere kann diese Komponente eine temperaturbeeinflussende Komponente, z.B. ein Motor, insbesondere ein Elektromotor, der Transportkältemaschine sein. Der elektrische Motor der Transportkältemaschine kann ein Drehstrommotor sein. Ein Beispiel für einen solchen Drehstrommotor ist ein Drehstrom-Asynchronmotor oder ein Drehstrom-Synchronmotor. Der Elektromotor kann beispielsweise ein Antrieb für einen Verdichter sein und damit eine temperaturbeeinflussende Komponente.

Alternativ oder zusätzlich kann die Transportkältemaschine beispielsweise zumindest eine Komponente aufweisen, welche mit einer Gleichspannung betrieben wird, insbesondere mit einer Gleichspannung in einem 48V-Spannungsband. Dies kann beispielsweise zumindest einer der zumindest eine Lüfter der Transportkältemaschine sein, insbesondere ein Verdampferlüfter, beispielsweise alternativ oder zusätzlich ein oder die Hochspannungs-Energiequellen-Lüfter und/oder ein oder die Kondensatorlüfter.

Die Transportkältemaschine kann dazu eingerichtet sein, sowohl Verbraucher des Hochspannungsbandes als auch des 48V-Spannungsbandes zumindest zeitweise aus der Hochspannungs-Energiequelle mit elektrischer Leistung zu versorgen.

Die Hochspannungs-Energiequelle ist mittelbar und/oder unmittelbar mit der Transportkältemaschine elektrisch verbunden. Die Energiequelle kann in einer unmittelbaren Verbindung beispielsweise über einen elektrischen Leiter wie beispielsweise ein Kabel mit der Transportkältemaschine verbunden sein. In einer mittelbaren Verbindung kann zwischen der Energiequelle und der Transportkältemaschine zumindest eine weitere Komponente angeordnet sein, beispielsweise ein Schalter, eine Sicherung, ein Messinstrument und/oder Kombinationen hieraus.

Die Hochspannungs-Energiequelle kann individuell mit einzelnen Komponenten der Transportkältemaschine, beispielsweise einem Motor, Kompressor, Verdampfer, Lüfter und/oder Kombinationen heraus, verbunden sein. Beispielsweise kann die Energiequelle hierbei einzelne Komponenten mit der von ihnen benötigten Spannungsart, insbesondere entweder mit einer dreiphasigen Wechselspannung, insbesondere mit einer Spannung in Höhe von 260V bis 540 V (z.B. 400 V) (Effektivwert der verketteten Spannungen) direkt versorgen. Auch kann ein Netzteil, beispielsweise ein AC/DC Netzteil, vorgesehen sein (beispielsweise als Teil der Transportkältemaschine), welche aus einem Hochspannungsband der Hochspannungs-Energiequelle eine Gleichspannung erzeugt, insbesondere eine Gleichspannung in einem 48V-Spannungsband.

Auch kann die Energiequelle an einem einzigen Anschluss der Transportkältemaschine angeschlossen sein, insbesondere in einer einzigen Spannungsart, beispielsweise in einer dreiphasigen Wechselspannung. Von dem Anschluss ausgehend können eine oder mehrere, insbesondere alle Komponenten der Transportkältemaschine zumindest zeitweise mit elektrischer Energie versorgt werden. Gegebenenfalls ist die Transportkältemaschine in diesem Fall dazu eingerichtet, eine interne Konvertierung der Spannungsart am Anschluss in zumindest eine andere von zumindest einer Komponente der Transportkältemaschine benötigten Spannungsart umzuwandeln.

Beispielsweise kann die Transportkältemaschine, das Straßennutzfahrzeug, die Energiequelle und/oder der Energieversorgungsanschluss einen weiteren Spannungswandler umfassen. Beispielsweise kann die Transportkältemaschine ein 48V-Netzteil aufweisen, welches ausgehend von dem Hochspannungsband elektrische Leistung in einem 48V-Spannungsband bereitstellt. Beispielsweise kann hierfür ein Spannungswandler vorgesehen sein, der dazu eingerichtet ist, ausgehend von einer Wechselspannung im Hochspannungsband, insbesondere einer dreiphasigen Wechselspannung, insbesondere mit einer Spannung in Höhe von 260V bis 540 V (z.B. 400 V) (Effektivwert der verketteten Spannungen), zu einer Gleichspannung, insbesondere einer Gleichspannung in einem 48V-Spannungsband, zu konvertieren. Auch können mehrere Spannungswandler vorgesehen sein, beispielsweise um aus anderen Spannungen (Gleich- oder Wechselspannungen) in ein 48V-Spannungsband zu konvertieren.

Der weitere Spannungswandler kann beispielsweise an einer der drei Phasen des dreiphasigen Wechselspannungsanschlusses angeschlossen sein und/oder zwischen zwei Phasen. Auch kann der weitere Spannungswandler an allen drei Phasen angeschlossen sein, beispielsweise in einer Stern- oder Dreiecksschaltung.

Der weitere Spannungswandler (ausgehend von Hochspannungsband zu 48V-Spannungsband) kann beispielsweise auf einen Leistungsfluss von zumindest oder bis zu 100W, 200W, 300W, 400W, 500W, 600W, 700W, 800W, 900W, 1kW, 1,5kW, 2kW, 3kW, 4kW, 5kW, 6kW, oder 7kW ausgelegt sein.

Der weitere Spannungswandler kann unidirektional ausgebildet sein und lediglich Leistungsflüsse ausgehend vom Hochspannungsband in das 48V-Spannungsband zulassen.

Alternativ oder zusätzlich kann die Hochspannungs-Energiequelle als ein Energieversorgungsanschluss ausgebildet sein. Der Energieversorgungsanschluss kann dazu eingerichtet sein, elektrische Energie zur Versorgung der Transportkältemaschine von einer externen elektrischen Energieversorgung zu empfangen.

Der Energieversorgungsanschluss kann insbesondere elektrische Leistung in Form von Gleichspannung, Wechselspannung, insbesondere als eine mehrphasige Wechselspannung empfangen, insbesondere im Hochspannungsband. Insbesondere kann dies eine dreiphasige Wechselspannung sein, insbesondere eine Spannung in Höhe von 260V bis 540 V (z.B. 400 V) (Effektivwert der verketteten Spannungen). Der Energieversorgungsanschluss kann insbesondere in Form einer Steckdose wie einer Drehstromstreckdose (z.B. CEE Drehstromsteckdose) ausgebildet sein.

Zusätzlich oder alternativ kann der Energieversorgungsanschluss als ein für den Automobilbereich gängiger Ladeanschluss, beispielsweise eine Ladebuchse und/oder ein Ladestecker, geformt sein. Beispielsweise kann dies ein als Type 1 J1772, Type 2 Mennekes, CHAdeMo, CCS Combo Type 1, CCS Combo Type 2, GB/T oder Supercharger Ladestecker oder eine dazugehörige Ladebuchse sein. Das Straßennutzfahrzeug und/oder die Transportkältemaschine können Mittel vorsehen, mit derer die von einem derartigen Ladeanschluss bereitgestellten Spannungen in für die Transportkältemaschine notwendigen Spannungsarten umgewandelt werden. Hierfür kann insbesondere zumindest ein Spannungswandler vorgesehen sein, insbesondere ein Wechselrichter.

Die Transportkältemaschine kann folglich ausgehend von dem Energieversorgungsanschluss mit elektrischer Energie versorgt werden. Hierfür empfängt der Energieversorgungsanschluss elektrische Energie von einer externen elektrischen Energieversorgung. Die externe elektrische Energieversorgung kann beispielsweise eine Ladeinfrastruktur, insbesondere eine Ladesäule, sein, ein Energieversorgungsnetz, ein anderes Fahrzeug, ein zum Straßennutzfahrzeug externer Energiespeicher und/oder Kombinationen hieraus.

Ferner umfasst das Straßennutzfahrzeug (insbesondere die Transportkältemaschine) eine 48V-Hilfsenergiequelle.

Die 48V-Hilfsenergiequelle ist dazu eingerichtet, in dem 48V-Spannungsband elektrische Energie mit einer Hilfsleistung bereitzustellen. Insbesondere ist die 48V-Hilfsenergiequelle unabhängig von der (z.B. von einer momentanen Verfügbarkeit der) Hochspannungs-Energiequelle. Die 48V-Hilfsenergiequelle ist damit zu trennen von einem 48V-Netzteil/-Spannungswandler, welcher gespeist durch die Hochspannungs-Energiequelle eine 48V-Spannung bereitstellt. Stattdessen ist die 48V-Hilfsenergiequelle eigengespeist. Nicht ausgeschlossen ist hierbei jedoch, dass die 48V-Hilfsenergiequelle zu einem anderen (früheren) Zeitpunkt elektrische Energie von der Hochspannungs-Energiequelle empfangen hat.

Gemäß beispielhaften Ausführungsformen umfasst die 48V-Hilfsenergiequelle ein Solarmodul, z.B. angeordnet auf dem (z.B. Dach des) Straßennutzfahrzeug(s).

Alternativ oder zusätzlich umfasst die 48V-Hilfsenergiequelle einen elektrischen 48V-Energiespeicher, z.B. einen 48V-Akkumulator. Ein 48V-Energiespeicher ist insbesondere dazu eingerichtet, ohne Zuhilfenahme von Spannungswandlern in einem 48V-Spannungsband elektrische Leistung bereitzustellen. Insbesondere ist ein 48V-Energiespeicher von einem 12V-Energiespeicher abzugrenzen, welcher beispielsweise eine Starterbatterie in einem Automobil sein kann. Dieser würde zur Bereitstellung einer elektrischen Leistung in einem 48V-Spannungsband einen Gleichstromwandler benötigen. Der 48V-Energiespeicher stellt somit nativ 48V bereit, beispielsweise durch eine entsprechende Zellenspannung. Der 48V-Energiespeicher kann insbesondere frei von einem hochsetzenden (z.B. Boost-) Spannungswandler funktionieren.

Die 48V-Hilfsenergiequelle ist dazu eingerichtet, zumindest einen der zumindest einen Lüfter, mit elektrischer Energie zu versorgen. Insbesondere ist die 48V-Hilfsenergiequelle dazu eingerichtet, den Verdampferlüfter mit elektrischer Energie zu versorgen. Alternativ ist die 48V-Hilfsenergiequelle dazu eingerichtet, den Verdampferlüfter und zumindest einen der oder beide des zumindest einen Kondensatorlüfters oder des zumindest einen Motorraumlüfter mit elektrischer Energie zu versorgen oder alle der zumindest einen Lüfter mit elektrischer Energie zu versorgen.

Wenn eine Energiequelle (z.B. 48V-Energiequelle oder Hochspannungs-Energiequelle) dazu eingerichtet sein, einen Verbraucher (z.B. Lüfter oder temperaturbeeinflussende Komponente) mit elektrischer Energie zu versorgen, ist hiermit insbesondere gemeint, dass die jeweilige Energiequelle den Verbraucher in zumindest einem Betriebsmodus mit elektrischer Energie versorgt und/oder versorgen kann. Insbesondere können auch Betriebsmodi vorgesehen sein, in welchem eine jeweilige erste Energiequelle keine Energie für den jeweiligen Verbraucher bereitstellt (z.B. während eine jeweils andere, zweite Energiequelle elektrische Energie bereitstellt), obwohl die erste Energiequelle prinzipiell dazu eingerichtet ist, den jeweiligen Verbraucher mit elektrischer Energie zu versorgen.

Das Straßennutzfahrzeug und/oder die Transportkältemaschine ist ferner dazu eingerichtet, die zumindest eine temperaturbeeinflussende Komponente frei von einer elektrischen Energieversorgung durch die 48V-Hilfsenergiequelle (und/oder aus dem 48V-Spannungsband) zu halten. Beispielsweise kann dies gewährleistet sein durch einen unidirektionaler 48V-Spannungswandler zwischen dem Hochspannungsband und dem 48V-Spannungsband, welcher lediglich Leistungsflüsse ausgehend vom Hochspannungsband in das 48V-Spannungsband zulässt, jedoch Leistungsflüsse in umgekehrter Richtung unterbindet.

Das Straßennutzfahrzeug und/oder die Transportkältemaschine ist dazu eingerichtet, in einem Hilfsbetriebsmodus zumindest einen der zumindest einen Lüfter (z.B. den zumindest einen Verdampferlüfter) zumindest teilweise (z.B. vollständig oder zusätzlich zu einer Versorgung ausgehend von der Hochspannungs-Energiequelle) ausgehend von der 48V-Hilfsenergiequelle mit elektrischer Energie zu versorgen. In dem Hilfsbetriebsmodus speist also die 48V-Hilfsenergiequelle elektrische Leistung in das 48V-Spannungsband (in ein 48V-Unternetz der Transportkältemaschine) ein.

Gemäß einem Ausführungsbeispiel des ersten beispielhaften Aspekts, wird vorgeschlagen, dass der Hilfsbetriebsmodus einem Boost-Modus entspricht, in welchem die zumindest eine temperaturbeeinflussende Komponente ausgehend von der Hochspannungs-Energiequelle mit elektrischer Energie (z.B. mit der Hilfsleistung) versorgt wird.

Im Boost-Modus wird somit gleichzeitig einerseits zumindest einer der zumindest einen Lüfter ausgehend von der Hilfsenergiequelle mit elektrischer Energie versorgt und andererseits die zumindest eine temperaturbeeinflussende Komponente ausgehend von der Hochspannungs-Energiequelle mit elektrischer Energie versorgt.

Es wurde erkannt, dass durch eine Versorgung des zumindest einen Lüfters mit Hilfsenergie im 48V-Spannungsband aufseiten der Hochspannungs-Energiequelle (z.B. Generator) im Hochspannungsband Ressourcen frei werden für eine erhöhte Energiezufuhr zu der zumindest einen temperaturbeeinflussenden Komponente der Transportkältemaschine.

Wie bereits oben ausgeführt, ist das Straßennutzfahrzeug, die Transportkältemaschine und/oder die 48V-Hilfsquelle dazu eingerichtet, die zumindest eine temperaturbeeinflussende Komponente, welche elektrische Energie im Hochspannungsband erhält, frei von einer elektrischen Energieversorgung durch die 48V-Hilfsquelle, also aus dem 48V-Spannungsband, zu halten. Hiermit ist insbesondere gemeint, dass ein (z.B. direkter) Energiefluss ausgehend von dem der 48V-Hilfsenergiequelle zu den temperaturbeeinflussenden Komponenten unterbunden wird. Beispielsweise kann ein 48V-Unternetz, an welches der zumindest eine Lüfter und die 48V-Hilfsenergiequelle elektrisch angeschlossen sind, von einem weiteren Unternetz, an welches die temperaturbeeinflussenden Komponenten (z.B. und die Energiequelle) angeschlossen sind (z.B. ein 400V-Dreiphasenwechselstrom-Unternetz) durch einen unidirektionalen Wandler getrennt sein.

Nicht ausgeschlossen ist hierdurch jedoch eine indirekte Beeinflussung der elektrischen Energieversorgung der temperaturbeeinflussenden Komponenten im Hochspannungsband durch die von der 48V-Hilfsenergiequelle bereitgestellte Hilfsleistung. Insbesondere kann zumindest eine der zumindest einen temperaturbeeinflussenden Komponenten mehr Leistung von der Hochspannungs-Energiequelle beziehen, wenn Hilfsleistung von der 48V-Hilfsenergiequelle bereitgestellt wird, als wenn keine Hilfsleistung durch die 48V-Hilfsenergiequelle bereitgestellt wird.

Als eine besonders leistungsintensive temperaturbeeinflussende Komponente, welche im Boost-Modus mehr Leistung aufnehmen kann als zuvor, kommt insbesondere ein Elektromotor eines Verdichters eines Kältekreislaufs der Transportkältemaschine in Betracht. Alternativ oder zusätzlich kann eine temperaturbeeinflussenden Komponente eine wärmeerzeugende Komponente umfassen, beispielsweise eine Heizkomponente, beispielsweise einen Heizdraht.

Beispielsweise kann im Boost-Modus die Hochspannungs-Energiequelle zumindest zeitweise mit mindestens 80%, 90%, 95%, 99% einer ihr zugeordneten Maximalleistung elektrische Energie (z.B. für die temperaturbeeinflussenden Komponenten) bereitstellen. Beispielsweise kann ferner ein Großteil (z.B. zumindest 50%, 60%, 70%, 80%, 90%, 95%, 99%) der Lüfter und/oder der Lüfterleistung der Lüfter der Transportkältemaschine von der 48V-Hilfsenergiequelle versorgt und/oder bereitgestellt werden.

Im Boost-Modus ist eine stärkere Temperaturbeeinflussung des Laderaums des Straßennutzfahrzeugs möglich als bei bisherigen Systemen. Dies wird erzielt ohne eine kostspielige und teilweise regulatorisch beschränkte Änderung (Leistungssteigerung) der Hochspannungs-Energiequelle.

Der Boost-Modus kann beispielsweise für eine Zeitspanne von zumindest 5min, 10min, 20min, 30min, 40min, 50min, 1h, 2h andauern. Die 48V-Hilfsenergiequelle kann beispielsweise dazu eingerichtet sein, den Boost-Modus über die jeweilige Zeitspanne zu ermöglichen.

Gemäß einem Ausführungsbeispiel des ersten beispielhaften Aspekts, wird vorgeschlagen, dass der Hilfsbetriebsmodus einem Teillast-Modus entspricht, in welchem die zumindest eine temperaturbeeinflussende Komponente (z.B. im Wesentlichen oder vollständig) deaktiviert (z.B. frei von jeglicher Energieversorgung und/oder Energieaufnahme) ist und/oder die Hochspannungs-Energiequelle (z.B. im Wesentlichen oder vollständig) keine Leistung bereitstellt und/oder die zumindest eine temperaturbeeinflussende Komponente frei von einer Versorgung mit elektrischer Energie ausgehend von der Hochspannungs-Energiequelle ist.

Der Hilfsbetriebsmodus kann somit einem Teillastmodus und/oder einem Boost-Modus entsprechen.

Als ein Teillastmodus ist insbesondere ein Hilfsbetriebsmodus offenbart, in welchem temperaturbeeinflussende (z.B. im Hochspannungsband zu versorgende) Komponenten ausgeschaltet sind. Es kann hierbei vorteilhaft sein, zumindest einen der zumindest einen Lüfter, insbesondere einen der oder die Verdampferlüfter, weiterhin zu betreiben. Beispielsweise kann hierdurch eine Luftumwälzung und damit eine gleichmäßige Temperaturverteilung im Innenraum, insbesondere Laderaum, erreicht werden. Auch kann ein Temperatursensor mit Luft bestromt werden und somit die Innenraumtemperatur weiterhin korrekt erfassen.

Zumindest einer der Lüfter, insbesondere zumindest einer der und/oder der zumindest eine Verdampferlüfter, wird deshalb im Teillastmodus ausgehend von der 48V-Energiequelle mit elektrischer Energie versorgt. Die Hochspannungs-Energiequelle kann damit im Teillastmodus deaktiviert sein. Insbesondere vorteilhaft kann dies im Falle eines Generators sein, welcher nur mit einer Mindestleistung arbeiten kann. Die Mindestleistung kann oberhalb der Leistungsaufnahme des zumindest einen Lüfters, insbesondere des zumindest einen Verdampferlüfters, liegen. Ein Betreiben des Generators könnte somit ineffizient sein, was durch den Teillast-Modus umgangen wird.

Auch können im Teillastmodus zumindest zeitweise andere der zumindest einen Lüfter als der Verdampferlüfter betrieben werden, beispielsweise (z.B. zumindest einer der) der zumindest eine(n) Hochspannungs-Energiequellen-Lüfter und/oder (z.B. zumindest einer der) der zumindest eine(n) Kondensatorlüfter.

Insbesondere kann in einem Teillastmodus zumindest zeitweise (z.B. nur) einer der zumindest einen oder (z.B. nur) der zumindest eine Hochspannungs-Energiequellen-Lüfter (z.B. Motorraumlüfter und/oder Hochvolt-Energiespeicher-Lüfter) betrieben werden. Beispielsweise können die verbleibenden Lüfter der Transportkältemaschine ruhen. Beispielsweise kann durch den Betrieb des Hochspannungs-Energiequellen-Lüfter sichergestellt werden, dass sich zumindest eine elektronische Komponente der Transportkältemaschine, z.B. eine Komponente einer Leistungselektronik und/oder eines Steuerungseinrichtung und/oder ein Energiespeicher, z.B. der Hochspannungs-Energiespeicher, nicht über ein zulässiges Maß hinaus aufwärmt.

Im Teillastmodus kann durchgehend eine Temperatur des Laderaums überwacht werden. Beispielsweise kann hierfür ein Temperatursensor genutzt werden, insbesondere ein Temperatursensor, welcher sich in einem Bereich der Transportkältemaschine befindet, in welcher Luft ausgehend vom Laderaum zu dem Verdampfer gesogen wird und/oder in einem Bereich der Transportkältemaschine, in welcher Luft ausgehend vom Verdampfer zum Laderaum ausgeblasen wird. Damit unterscheidet sich der Teillastmodus insbesondere von einem reinen Nachlauf von Lüftern.

Der Teillastmodus kann beispielsweise für eine Zeitspanne von zumindest 5min, 10min, 20min, 30min, 40min, 50min, 1h, 2h andauern. Die 48V-Hilfsenergiequelle kann beispielsweise dazu eingerichtet sein, denn Teillastmodus über die jeweilige Zeitspanne zu ermöglichen.

Gemäß einem Ausführungsbeispiel des ersten beispielhaften Aspekts, wird vorgeschlagen, dass

- der zumindest eine Lüfter zumindest einen Verdampferlüfter, zumindest einen Kondensatorlüfter und/oder zumindest einen Hochspannungs-Energiequellen-Lüfter (z.B. Motorraumlüfter) umfasst, und wobei
- in dem Teillast-Modus der zumindest eine der zumindest einen Lüfter, welcher ausgehend von der 48V-Hilfsenergiequelle mit elektrischer Energie versorgt wird, zumindest der Verdampferlüfter umfasst, insbesondere wobei der Kondensatorlüfter und/oder der Hochspannungs-Energiequellen-Lüfter frei von Versorgung mit elektrischer Energie ausgehend von der 48V-Hilfsenergiequelle ist, und/oder
- in dem Boost-Modus der zumindest eine der zumindest einen Lüfter, welcher ausgehend von der 48V-Hilfsenergiequelle mit elektrischer Energie versorgt wird, zumindest den Verdampferlüfter und zumindest einer von Kondensatorlüfter und/oder der Hochspannungs-Energiequellen-Lüfter umfasst.

Wenn hier, im Folgenden und/oder Vorangehenden von einer Versorgung einer Komponente (z.B. eines elektrischen Verbrauchers) mit elektrischer Energie die Rede ist, ist damit zumindest unter anderem die Bereitstellung von elektrischer Leistung zum Betreiben der Komponente gemeint. Umgekehrt ist bei der Verwendung des Begriffs Leistung, insbesondere der Bereitstellung von Leistung zum Betreiben einer Komponente (z.B. eines elektrischen Verbrauchers), zumindest unter anderem die Übertragung von Energie, insbesondere die Versorgung der Komponente mit elektrischer Energie, gemeint.

Gemäß einem Ausführungsbeispiel des ersten beispielhaften Aspekts, wird vorgeschlagen, dass die Transportkältemaschine und/oder das Straßennutzfahrzeug und/oder die 48V-Hilfsenergiequelle dazu eingerichtet ist, zumindest eine temperaturbeeinflussende Komponente in Abhängigkeit von der Hilfsleistung zu steuern, insbesondere derart, dass eine Leistungsaufnahme der zumindest einen temperaturbeeinflussenden Komponente mit steigender Hilfsleistung erhöht wird.

Das Straßennutzfahrzeug, die Transportkältemaschine und/oder die 48V-Hilfsenergiequelle kann dazu eingerichtet sein, die (z.B. momentane und/oder abrufbare, beispielsweise für eine gegebene Zeit, z.B. zumindest 5min, 10min, 15min, 20min, 30min, 40min, 50min, 1h, 1,5h, 2h, 3h oder 4h abrufbare) Hilfsleistung zu bestimmen. Hierdurch kann beispielsweise eine Steuerung von Komponenten wie z.B. einem Spannungswandler zwischen dem Hochspannungsband und dem 48V-Spannungsband und/oder zumindest einer temperaturbeeinflussenden Komponente abhängig von der Hilfsleistung ermöglicht und/oder begünstigt werden.

Insbesondere kann eine kälteerzeugende Komponente, insbesondere ein Elektromotor, welcher den Kompressor antreibt, (derart) in Abhängigkeit von der Hilfsleistung gesteuert werden. Auch kann jede andere temperaturbeeinflussende Komponente, insbesondere eine wärmeerzeugende Komponente, beispielsweise eine Heizkomponente, (derart) in Abhängigkeit von der Solarleistung gesteuert werden.

Eine erhöhte Leistungsaufnahme kann beispielsweise dazu führen, dass eine Temperaturbeeinflussung eines Innenraums (z.B. Laderaum) des Straßennutzfahrzeugs durch die temperaturbeeinflussende Komponente besonders stark ausfallen kann. Beispielsweise kann eine besonders schnelle Temperaturänderung bewirkt werden und/oder eine besonders starke Abweichung zwischen einer Innen- und einer Außentemperatur. Beispielsweise kann eine temperaturbeeinflussende (z.B. kälteerzeugende) Komponente in einer Phase mit hoher Hilfsleistung derart angesteuert werden, dass eine temporäre Überbeeinflussung der Innenraumtemperatur erreicht wird. Z.B. im Falle einer kälteerzeugenden Komponenten kann der Innenraum temporär auf einen Wert unterhalb eines üblicherweise (z.B. ohne Hilfsleistung) angesteuerten minimalen Temperaturwertes (z.B. Minimum eines Temperaturkorridors) eingestellt werden (z.B. unter Berücksichtigung der Anforderungen einer jeweils transportierten Ware). Hierdurch kann ein Puffer (z.B. in Form von (entnommener) Wärme) erreicht werden.

Insbesondere wurde erkannt, dass in Phasen hoher Hilfsleistung die Hochspannungs-Energiequelle, welche sowohl die temperaturbeeinflussenden Komponenten als auch die Lüfter versorgt, durch teilweise solargespeiste Versorgung der Lüfter entlastet werden kann. Die Hochspannungs-Energiequelle kann damit im Vergleich zu einem Zustand ohne verfügbare Hilfsenergie freigewordene Leistungskapazitäten nutzen, indem eine höhere Leistung für die temperaturbeeinflussenden Komponenten bereitgestellt wird. Genau diese Möglichkeit wird gegenständlich ausgenutzt, wenn eine (z.B. Erhöhung der) Leistungsaufnahme von temperaturbeeinflussenden Komponenten abhängig von der (z.B. im Falle hoher) Hilfsleistung vorgeschlagen wird.

Gemäß einem Ausführungsbeispiel des ersten beispielhaften Aspekts, wird vorgeschlagen, dass die Transportkältemaschine und/oder das Straßennutzfahrzeug und/oder das Solarmodul ferner dazu eingerichtet ist, die zumindest eine temperaturbeeinflussende Komponente mit einer Leistung zu betreiben, welche um eine Überleistung oberhalb einer hilfsenergiequellenunabhängigen Maximaltemperierleistung liegt, wobei die Überleistung abhängig von der Hilfsleistung ist, insbesondere mit steigender Hilfsleistung steigt und/oder zumindest im Wesentlichen (z.B. zu höchstens 70%, 80%, 90%, 95%) der Hilfsleistung entspricht (z.B. wobei die Leistung stets unterhalb einer maximalen Leistungsabgabe der Energiequelle liegt).

Die hilfsenergiequellenunabhängige Maximaltemperierleistung kann beispielsweise einer maximal verfügbaren Leistungsaufnahme der temperaturbeeinflussenden Komponenten entsprechen, wenn keine Hilfsenergiequelle verfügbar ist. Beispielsweise kann die hilfsenergiequellenunabhängige Maximaltemperierleistung bestimmt sein basierend auf einer maximalen Leistungsabgabe der Hochspannungs-Energiequelle (z.B. 19kW), abzüglich einer Lüfterleistung (z.B. (maximale und/oder durchschnittliche) Leistung aller oder einer Teilmenge der Lüfter; z.B. 5kW, somit beispielsweise eine hilfsenergiequellenunabhängige Maximaltemperierleistung von 14kW). Beispielsweise kann ferner zumindest eine weitere Leistungsaufnahme zumindest einer weiteren Komponente z.B. eine Ladeleistung einer Batterie von der Leistung der Hochspannungs-Energiequelle abgezogen werden, um zur hilfsenergiequellenunabhängigen Maximaltemperierleistung zu gelangen.

Zu beachten ist, dass eine effektive Temperierleistung der temperaturbeeinflussenden Komponenten (z.B. bei einer gegebenen Leistungsaufnahme der temperaturbeeinflussenden Komponenten) abhängig sein kann von einem Betriebszustand nicht-temperaturbeeinflussender Komponenten wie z.B. dem zumindest einen Lüfter. Beispielsweise kann eine effektive Kühlleistung um eine Verlustleistung zumindest einen des zumindest einen Lüfters (z.B. des zumindest einen Verdampferlüfters und/oder des zumindest einen Kondensatorlüfters) gemindert sein. Somit kann beispielsweise bei konstanter Leistungsaufnahme (z.B. mit hilfsenergiequellenunabhängiger Maximaltemperierleistung) der temperaturbeeinflussenden Komponenten eine Variation der effektiven Temperierleistung dadurch hervorgerufen werden, dass die Leistung zumindest eines der zumindest einen Lüfter, insbesondere Verdampferlüfter und/oder Kondensatorlüfter variiert wird.

Die Transportkältemaschine umfasst, siehe oben, verschiedene Verbraucher, unter anderem die zumindest eine temperaturbeeinflussende Komponente (z.B. einen Kältekreislauf, insbesondere umfassend einen Verdichter) und den zumindest einen Lüfter. Insbesondere kann die Transportkältemaschine derart eingerichtet sein, dass die Energiequelle die Verbraucher der Transportkältemaschine mit elektrischer Energie versorgt, den Verbrauchern also elektrische Leistung zuführt. Eine Leistungsabgabe der Energiequelle ist begrenzt auf eine Maximalleistung (z.B. 19kW). Alle Verbraucher können gemeinsam stets beispielsweise nur höchstens die maximale Leistung der Energiequelle aufnehmen. Eine elektrische Leistung, welche an die zumindest eine temperaturbeeinflussende Komponente geliefert wird, kann damit höchstens der Maximalleistung der Energiequelle abzüglich des Leistungsbedarfs des zumindest einen Lüfters entsprechen. Diese maximale Leistungsaufnahme der zumindest einen temperaturbeeinflussenden Komponente wird hier insbesondere als hilfsenergiequellenunabhängigen Maximaltemperierleistung bezeichnet.

Die hilfsenergiequellenunabhängigen Maximaltemperierleistung kann beispielsweise einen zeitlich variablen Wert annehmen, welcher z.B. von einer zeitlich variablen Lüfterleistung abhängt. Insbesondere wurde erkannt, dass die Lüfterleistung zumindest eines der zumindest einen Lüfters und/oder der zumindest einen Lüfter im Wesentlichen konstant sein kann, sodass die hilfsenergiequellenunabhängigen Maximaltemperierleistung ebenfalls im Wesentlichen konstant ist, zumindest zeitweise.

Es wurde erkannt, dass die Begrenzung der Leistungsaufnahme der zumindest einen temperaturbeeinflussenden Komponenten auf die hilfsenergiequellenunabhängigen Maximaltemperierleistung durch die 48V-Hilfsenergiequelle überwunden werden kann. Insbesondere kann die zumindest eine temperaturbeeinflussende Komponente um eine Überleistung mehr Leistung aufnehmen als die hilfsenergiequellenunabhängige Maximaltemperierleistung. Dadurch, dass der zumindest eine Lüfter zumindest teilweise von der Hilfsleistung gespeist wird, kann die zumindest eine temperaturbeeinflussende Komponente insbesondere eine zusätzliche Überleistung aufnehmen, welche der Hilfsleistung entspricht. Hierfür ist anmeldungsgemäß kein (z.B. direkter) elektrischer Leistungsfluss ausgehend von der 48V-Hilfsenergiequelle zu der zumindest einen temperaturbeeinflussenden Komponente notwendig sondern lediglich eine Reduktion eines elektrischen Leistungsflusses ausgehend von der Energiequelle zu dem zumindest einen Lüfter.

Gemäß einem Ausführungsbeispiel des ersten beispielhaften Aspekts, wird vorgeschlagen, dass das Straßennutzfahrzeug und/oder die Transportkältemaschine und/oder die 48V-Hilfsenergiequelle dazu eingerichtet ist, den zumindest einen Lüfter ausgehend von der Hochspannungs-Energiequelle mit einer Leistung zu betreiben, welche um eine Unterleistung unterhalb einer (z.B. momentanen) Leistungsaufnahme des zumindest einen Lüfters liegt, insbesondere wobei die Unterleistung betragsmäßig der Überleistung und/oder der Hilfsleistung entspricht.

Dadurch, dass ein Leistungsfluss ausgehend von der Energiequelle zu dem zumindest einen Lüfter reduziert wird, kann die Energiequelle hierdurch freigewordene Leistungskapazitäten, welche nicht mehr für die Versorgung der Lüfter benötigt werden, an die temperaturbeeinflussenden Komponenten weitergeben.

Gemäß einem Ausführungsbeispiel des ersten beispielhaften Aspekts, wird vorgeschlagen, dass die Transportkältemaschine und/oder das Straßennutzfahrzeug und/oder die 48V-Hilfsenergiequelle ferner dazu eingerichtet ist, die Energiequelle in Abhängigkeit von der Hilfsleistung zu steuern, insbesondere derart, dass eine Leistungsabgabe der Energiequelle mit steigender Hilfsleistung verringert wird.

Auch kann, beispielsweise zusätzlich oder alternativ zu einer (z.B. um eine Überleistung) erhöhten Leistungszufuhr zu zumindest einer temperaturbeeinflussenden Komponente, die Leistungsabgabe der Hochspannungs-Energiequelle (z.B. im Boost-Modus) reduziert werden. Beispielsweise kann hierdurch ein Verbrauch von Treibstoff (z.B. Diesel eines Dieselgenerators) eingespart werden.

Beispielsweise kann im Boost-Modus eine Hilfsleistung abhängig von einem Arbeitspunkt der Hochspannungs-Energiequelle eingestellt werden, beispielsweise derart, dass die Hochspannungs-Energiequelle in einem günstigen Arbeitspunkt betrieben wird.

Gemäß einem Ausführungsbeispiel des ersten beispielhaften Aspekts, wird vorgeschlagen, dass die zumindest eine temperaturbeeinflussende Komponente zumindest eine kälteerzeugende Komponente umfasst, insbesondere eine Komponente eines Kältemittelkreislaufs, insbesondere einen Kompressor und/oder dass die zumindest eine temperaturbeeinflussende Komponente zumindest eine wärmeerzeugende Komponente umfasst, insbesondere zumindest einen oder mehrere Heizstäbe (z.B. Heizdraht).

Wenn von der zumindest einen temperaturbeeinflussenden Komponente die Rede ist, ist hiermit insbesondere ein wärme- und/oder ein kälteerzeugende Komponente gemeint. Insbesondere ist eine kälteerzeugende Komponente gemein, insbesondere eine Komponente eines Kühlkreislaufs, insbesondere ein Verdichter, insbesondere ein Elektromotor, welcher dazu eingerichtet ist, den Verdichter anzutreiben.

Gemäß einem Ausführungsbeispiel des ersten beispielhaften Aspekts, wird vorgeschlagen, dass die 48V-Hilfsenergiequelle (und/oder die Transportkältemaschine und/oder das Straßennutzfahrzeug) dazu eingerichtet ist, die Hilfsleistung vollständig (z.B. und/oder zumindest zu 50%, 60%,70%, 80%, 90%, 95% oder 99%) dem zumindest einen Lüfter zuzuführen, welcher ausgehend von der 48V-Hilfsenergiequelle mit elektrischer Energie versorgt wird.

Beispielsweise kann die Hilfsleistung zumindest zeitweise oder durchgehend dem zumindest einen Lüfter zugeführt werden, insbesondere vollständig. Beispielsweise kann die Hilfsleistung zu einem Mindestanteil an den zumindest einen Lüfter geleitet werden, z.B. zu zumindest zu 50%, 60%, 70%, 80%, 90%, 95% oder 99%, z.B. im zeitlichen Durchschnitt und/oder zu jedem Zeitpunkt.

Gemäß einem Ausführungsbeispiel des ersten beispielhaften Aspekts, wird vorgeschlagen, dass die 48V-Hilfsenergiequelle zumindest ein Solarmodul umfasst.

Das Solarmodul kann insbesondere einen Spannungswandler umfassen. Beispielsweise kann es sich hierbei um einen Gleichspannungs-zu-Gleichspannung-Wandler handeln, auch DC/DC-Wandler oder Gleichstrom/Gleichstrom-Wandler genannt. Beispielsweise umfasst der Wandler einen Energiespeicher geringer Kapazität zu Kurzzeitspeicherung von Solarenergie. Der Spannungswandler kann beispielsweise dazu eingerichtet sein, eine solarseitige Spannung (z.B. zeitlich variabel) in das 48V-Spannungsband zu wandeln. Ferner kann der Spannungswandler dazu eingerichtet sein, einen Arbeitspunkt des Solarmoduls zu optimieren, beispielsweise per Maximum Power Point Tracking (MPPT).

Das Solarmodul kann eine Solarleistung abgeben, welche beispielsweise zumindest einem Teil oder auch der gesamten Hilfsleistung entsprechen kann.

Durch ein Solarmodul als (ein Teil der) 48V-Hilfsenergiequelle kann elektrische Energie insbesondere dann gewonnen werden, wenn das Straßennutzfahrzeug großer Sonneneinstrahlung ausgesetzt ist. Somit kann beispielsweise in Phasen hoher Kühlanforderungen ein solarbetriebener Boost-Modus aktiviert werden. Auch denkbar ist ein solarbetriebener Teillastbetrieb, in welchem zumindest einer der zumindest einen Lüfter, insbesondere der zumindest eine Verdampferlüfter, solarbetrieben weiterläuft, während die temperaturbeeinflussenden Komponenten und/oder die Hochspannungs-Energiequelle deaktiviert sind.

Gemäß einem Ausführungsbeispiel des ersten beispielhaften Aspekts, wird vorgeschlagen, dass das Solarmodul zumindest ein Solarpanel umfasst, insbesondere wobei das zumindest eine Solarpanel auf einem Dach und/oder an einer Seitenfläche des Straßennutzfahrzeugs angeordnet (z.B. befestigt) ist.

Das zumindest eine Solarpanel kann dazu eingerichtet sein, Sonnenstrahlung in elektrischen Strom umzuwandeln. Beispielsweise ist das Solarpanel zumindest teilweise aus einem Halbleiter, insbesondere Silizium, geformt. Das Solarpanel gibt abhängig von der darauf einwirkenden Sonnenstrahlung elektrische Leistung ab, insbesondere mit zeitlich variabler Spannung und/oder mit zeitlich variablem Strom.

Zumindest eines des zumindest einen Solarpanels kann beispielsweise an einer Außenwand des Straßennutzfahrzeugs angeordnet sein, beispielsweise auf einem Dach des Straßennutzfahrzeugs.

Das Solarmodul kann beispielsweise eine maximale Leistungsabgabe aufweisen, welche kleiner oder gleich einer maximalen Leistungsaufnahme des zumindest einen Lüfters (Lüfterleistung) (z.B. des zumindest einen Verdichterlüfters und/oder aller Lüfter der Transportkältemaschine zusammen) ist. Auch kann die maximale Leistungsabgabe des Solarmoduls höher gewählt werden als die (z.B. maximale) (z.B. Verdichter-)Lüfterleistung, damit auch in suboptimalen Betriebsbedingungen (z.B. Bewölkung, Dämmerung) eine hinreichende Hilfsenergieversorgung sichergestellt ist.

Beispielsweise kann der zumindest eine Lüfter eine Lüftungsleistungsaufnahme (z.B. 5kW) aufweisen, während das Solarmodul maximal (z.B. bei maximaler Sonneneinstrahlung und/oder optimalen Bedingungen, z.B. einer optimalen Temperatur und/oder Sauberkeit) eine Solarleistung (z.B. 3kW) bereitstellen, welche geringer als die Lüftungsleistungsaufnahme (z.B. 5kW) ist, oder eine Solarleistung (z.B. 8kW) bereitstellen, welche höher als die Lüftungsleistungsaufnahme (z.B. 5kW) ist. Hierdurch kann z.B. erreicht werden, dass die Solarleistung stets von dem zumindest einen Lüfter aufgenommen werden kann oder aber, dass der zumindest eine Lüfter möglichst durchgehend von dem Solarmodul mit Leistung versorgt werden kann.

Das Solarmodul kann neben dem zumindest einen Solarpanel noch weitere Komponenten umfassen, insbesondere eine Steuerungsvorrichtung. Die Steuerungsvorrichtung kann Teil eines Spannungswandlers sein. Die Steuerungsvorrichtung kann beispielsweise dazu eingerichtet sein, eine kontinuierliche Leistungsmaximierung (engl. Maximum Power Point Tracking, kurz MPP-Tracking oder auch MPPT) vorzunehmen. Hierdurch kann dem zumindest einen Solarpaneel stets eine möglichst hohe Leistung entnommen werden, welche unter anderem von einer Spannung am Solarpanel und/oder einer Temperatur des Solarpanels abhängt.

Das Solarmodul kann beispielsweise zumindest einen oder mehrere Spannungswandler (Solar-Spannungswandler) umfassen. Beispielsweise kann zumindest ein Solarspannungswandler dazu eingerichtet sein, eine solarseitige Spannung in 48V Gleichspannung zu wandeln. Hierdurch lässt sich das Solarmodul in ein 48V-Netz des Straßennutzfahrzeugs und/oder der Transportkältemaschine einbinden.

Das Solarmodul und/oder die Transportkältemaschine und/oder das Straßennutzfahrzeug sind insbesondere dazu eingerichtet, in dem 48V-Spannungsband Energie mit einer (z.B. zeitlich variablen) Solarleistung bereitzustellen, insbesondere für den zumindest einen Lüfter.

Gemäß einem Ausführungsbeispiel kann das Solarmodul (z.B. gänzlich) ohne Solar-Spannungswandler, insbesondere ohne 48V Gleichspannungswandler, auskommen. Die Solarpaneele können beispielsweise elektrisch wandlerlos mit dem zumindest einem Lüfter verbunden werden. Beispielsweise kann hiermit gemeint sein, dass die Solarspannung nicht auf 48V gewandelt wird, sondern direkt zu dem Lüfter geleitet wird. Es wurde erkannt, dass der zumindest eine Lüfter bereits eine jeweilige Spannungswandlervorrichtung umfassen kann, welche eine variable Eingangsspannung akzeptiert. Auch wurde erkannt, dass eine eventuelle Überspannung des Solarmoduls (oberhalb von 48V) (z.B. durch einen Festspannungsregler) gekappt werden kann.

Anmeldungsgemäß wurde erkannt, dass gerade ein 48V-Gleichspannungsunternetz einer Transportkältemaschine einen gut geeigneten Einspeisepunkt für weitere Energiequellen wie insbesondere ein Solarmodul bildet. Dies ist insbesondere relevant, auch für Lüfter das 48V-Spannungsband als besonders günstig erkannt wurde. Schließlich wurde erkannt, dass eine Versorgung der Lüfter in dem 48V-Spannungsband durch das Solarpaneel besonders günstig ist, da hierdurch der Hilfsbetriebsmodus, insbesondere der Teillastmodus und/oder der Boost-Modus ermöglicht werden.

Gemäß einem Ausführungsbeispiel des ersten beispielhaften Aspekts, wird vorgeschlagen, dass das 48V-Hilfsenergiequelle zumindest einen 48V-Hilfsenergiespeicher (z.B. nicht durch DC/DC hochtransformiert, sondern nativ in 48V; z.B. Zellspannung und/oder Klemmenspannung im 48V-Spannungsband; z.B. wandlerlos) umfasst.

Der Hilfsenergiespeicher kann dazu eingerichtet sein, elektrische Energie bereitzustellen. Zusätzlich oder alternativ kann der Hilfsenergiespeicher dazu eingerichtet sein, elektrische Energie aufzunehmen. In anderen Worten kann der Hilfsenergiespeicher wiederaufladbar sein.

Der Hilfsenergiespeicher kann beispielsweise als eine Batterie gebildet sein und/oder eine Batterie umfassen. Unter einer Batterie wird hier und im Folgenden insbesondere eine Sekundärbatterie verstanden, insbesondere ein Akkumulator, insbesondere ein elektrochemischer Akkumulator. Wenn im Folgenden von einer Batterie die Rede ist, ist damit also zumindest unter anderem eine wiederaufladbare Sekundärbatterie und/oder ein Akkumulator umfasst, welche sowohl elektrische Energie bereitstellen als auch elektrische Energie aufnehmen kann. Die hier offenbarten Batterien können also sowohl aufgeladen als auch entladen werden.

Beispielsweise kann der Hilfsenergiespeicher als eine Bleibatterie, eine Lithium-Ionen Batterie, insbesondere eine Lithium-Eisen-Phosphat-Batterie (LFP), eine Nickel-Cadmium oder ein Nickel-Metall-Hybrid-Batterie, eine Natrium-Ionen-Batterie und/oder Kombinationen hieraus gebildet sein.

Der Hilfsenergiespeicher kann ein Energiespeichermodul umfassen (z.B. in Form einer Batteriezelle). Insbesondere kann der Hilfsenergiespeicher auch zwei oder mehr Speichermodule umfassen.

Der Hilfsenergiespeicher ist ein 48V-Hilfsenergiespeicher, welcher elektrische Energie in einem 48V-Spannungsband bereitstellt. Der 48V-Hilfsenergiespeicher insbesondere dazu eingerichtet, wandlerlos elektrische Energie in einem 48V-Spannungsband bereitzustellen. Eine Klemmenspannung des 48V-Hilfsenergiespeicher liegt somit im 48V-Spannungsband. Beispielsweise kann eine aggregierte Zellenspannung, insbesondere durch geeignete serielle und/oder parallele Verschaltung von Batteriezellen des 48V-Hilfsenergiespeichers, in dem 48V-Spannungsband liegen.

Beispielsweise kann der 48V-Hilfsenergiespeicher gemeinsam mit dem Solarmodul vorgesehen sein. Diese können beispielsweise gemeinsam die 48V-Hilfsenergiequelle bilden. Beispielsweise kann der 48V-Hilfsenergiespeicher von dem Solarmodul aufgeladen werden.

Beispielsweise kann der 48V-Hilfsenergiespeicher eine Kapazität von zumindest 40 Ah, 50 Ah, 60 Ah, 70 Ah, 80 Ah, 90 Ah, 100 Ah, 150 Ah, 200 Ah, 250 Ah, 300 Ah, 350 Ah, 400 Ah, 450 Ah, 500 Ah oder mehr und/oder eine gespeicherte Energie von zumindest 2000 Wh, 3000 Wh, 4000 Wh, 5000 Wh, 6000 Wh, 7000 Wh, 8000 Wh, 9000 Wh, 10 kWh, 20 kWh, oder 30 kWh. Beispielsweise kann die Kapazität des 48V-Hilfsenergiespeicher derart gewählt sein, dass diese bei einer vollen Ladung des 48V-Hilfsenergiespeicher ausreicht, um den zumindest einen Verdampferlüfter oder die Gesamtheit der zumindest einen Lüfter der Transportkältemaschine zumindest 5min, 10min, 15min, 20min, 30min, 45min, 1h, 2h, 3h, 4h, 5h, 6h, 7h, 8h, 9h, 10h, 12h, 16h, 20h oder 24h mit elektrischer Energie zu versorgen.

Gemäß einem Ausführungsbeispiel des ersten beispielhaften Aspekts, wird vorgeschlagen, dass die Hilfsleistung

- einer momentanen Leistung des Solarmoduls (z.B. Solarleistung) entspricht,
- einer momentanen Endladeleistung des Hilfsenergiespeichers entspricht,
- einer momentanen Leistung des Solarmoduls abzüglich einer Ladeleistung des Hilfsenergiespeichers entspricht, und/oder
- einer momentanen Leistung des Solarmoduls zuzüglich einer Endladeleistung des Hilfsenergiespeichers entspricht.

Gemäß einem Ausführungsbeispiel des ersten beispielhaften Aspekts, wird vorgeschlagen, dass

- das Straßennutzfahrzeug dazu eingerichtet ist, in einem Lademodus ausgehend von der Hochspannungs-Energiequelle eine Leistung in das 48V-Spannungsband einzuspeisen, welche um eine Ladeleistung oberhalb der Leistungsaufnahme des zumindest einen Lüfters liegt um den Hilfsenergiespeicher mit der Ladeleistung aufzuladen (z.B. wenn detektiert wird, dass die Hochvolt-Energiequelle durch eine Erhöhung ihrer Leistungsabgabe (z.B. höhere Motordrehzahl) eine höhere Effizienz erreichen kann; z.B. wenn ein niedriger Ladezustand des Hilfsenergiespeichers detektiert wird; z.B. wenn eine bevorstehender erhöhter Energiebedarf prognostiziert wird).

Beispielsweise kann der 48V-Hilfsenergiespeicher eingerichtet sein, in einem Lademodus elektrische Energie von der Hochspannungs-Energiequelle zu empfangen und beispielsweise für eine spätere Verwendung (z.B. einen späteren Hilfsbetriebsmodus, insbesondere Teillastmodus und/oder Boost-Modus) vorhalten.

Beispielsweise kann (z.B. in Phasen geringer Auslastung der Hochspannungs-Energiequelle durch die temperaturbeeinflussenden Komponenten der Transportkältemaschine und/oder die Lüfter) eine Situation eintreten, in der sich die Hochspannungs-Energiequelle in einem ineffizienten Arbeitspunkt befindet und einen höheren Wirkungsgrad erreichen würde, wenn sie mehr elektrische Leistung bereitstellen könnte. In diesem Fall kann der 48V-Hilfsenergiespeicher elektrische Leistung (Ladeleistung) aufnehmen und somit den Wirkungsgrad der Hochspannungs-Energiequelle steigern sowie die elektrische Energie für spätere Verwendung vorhalten.

Beispielsweise kann im Lademodus die Ladeleistung abhängig von einem Arbeitspunkt der Hochspannungs-Energiequelle eingestellt werden, beispielsweise derart, dass die Hochspannungs-Energiequelle in einem günstigen Arbeitspunkt (z.B. günstiger als ohne Hilfsenergiequelle und/oder Hilfsleistung) betrieben wird. Ein günstiger Arbeitspunkt zeichnet sich insbesondere durch eine hohe Effizienz aus, z.B. durch ein hohes Verhältnis zwischen ausgegebener Energie (z.B. elektrischer Energie im Hochspannungsband) und (z.B. geteilt durch) aufgenommener Energie (z.B. Treibstoff). Beispielsweise kann ein Arbeitspunkt bestimmt werden anhand von vordefinierten Angaben zu dem Hochspannungs-Energiespeicher, z.B. hinterlegt in einer Steuerungseinrichtung der Transportkältemaschine und/oder des Straßennutzfahrzeugs.

Gemäß einem Ausführungsbeispiel des ersten beispielhaften Aspekts, wird vorgeschlagen, dass

- der eine Ladeleistung basierend auf einem prognostizierten Energiebedarf (z.B. für eine bevorstehende oder aktuelle Fahrt) der Transportkältemaschine eingestellt wird (z.B. basierend auf Wetter, insbesondere Temperatur; basierend auf Streckeneigenschaften, beispielsweise Schatten und/oder Fahrtrichtung).

Das Straßennutzfahrzeug kann eingerichtet sein, einen Energiebedarf der Transportkältemaschine für zumindest eine Strecke zu prognostizieren.

Beispielsweise kann die Prognose basieren auf einem Startpunkt (z.B. einer aktuellen Position des Straßennutzfahrzeugs) und einem Endpunkt (z.B. einem Ziel zumindest einer mittels des Straßennutzfahrzeugs transportierter Ware). Ferner kann die Prognose zumindest einen Zwischenstopp einbeziehen, z.B. basierend auf (z.B. gesetzlich vorgeschriebenen) Pausenzeiten zumindest eines Fahrers des Straßennutzfahrzeugs und/oder basierend auf Energiebezugsnotwendigkeiten (z.B. Tankstellenstopp und/oder Aufladestopp).

Insbesondere kann die Prognose eines für einen bevorstehenden Streckenabschnitt durchgeführt werden, z.B. zumindest oder höchstens für kommende 5km, 10km, 20km, 50km, 100km, 150km, 200km, 300km, und/oder zumindest 10min, 20min, 30min, 1h, 2h, 3h, 4h z.B. einer aktuell befahrenen Route.

Beispielsweise kann basierend auf der Prognose bestimmt werden, ob und in welcher Menge mit einer Solarleistung gerechnet werden kann.

Beispielsweise kann mittels der Prognose bestimmt werden, ob ein Boost-Modus notwendig sein wird (z.B. weil eine Etappe besonders hoher Außentemperatur bevorsteht). Auch kann basierend auf der Prognose bestimmt werden, ob ein Teillast-Modus möglich oder notwendig sein wird (z.B. weil ein Abschnitt geringer Anforderungen an Kühlung bevorsteht, z.B. ein Wald- oder Tunnelabschnitt; z.B. weil eine Etappe ohne Möglichkeit eines Betriebs der Hochspannungs-Energiequelle bevorsteht, z.B. eine Fährenfahrt oder eine Fahrpause in einem geräuschsensitiven Bereich, z.B. einer Wohnsiedlung, z.B. nachts).

Beispielsweise kann basierend auf der Prognose bestimmt werden, ob ein Teillast und/oder ein Boost-Modus zumindest teilweise basierend auf Solarleistung betrieben werden kann, beispielsweise gemeinsam mit dem 48V-Hilfsenergiespeicher.

Beispielsweise kann basierend auf der Prognose bestimmt werden, ob ein Lademodus vorteilhaft und/oder günstig ist, beispielsweise zumindest teilweise basierend auf einem aktuellen Ladezustand und/oder basierend darauf, ob dieser hinreichend ist für einen bevorstehenden Abruf von Hilfsleistung, beispielsweise in Kombination mit einer Prognose einer abrufbaren Solarleistung und/oder einer Notwendigkeit eines Boost- und/oder Teillastmodus.

Die Prognose des Energiebedarfs kann beispielsweise auf einer optimierten Routenführung basieren. Eine Route kann z.B. basierend auf Kartenmaterial bestimmt werden, z.B. nach einem Dijkstra Algorithmus.

Eine Energiebedarfsprognose kann z.B. basierend auf einer Länge einer ersten Strecke, einem Höhenprofil, einer Temperatur, einer Tageszeit, einer Klimazone, einer Vegetation, Bebauung und/oder Kombinationen hieraus bestimmt werden. Z.B. kann eine Temperatur eines Laderaums (z.B. eingestellte Set-Temperatur), ein Wärmeübertragungskoeffizient des Laderaums zur Umgebung und eine (z.B. gemittelte, z.B. prognostizierte) Außentemperatur und/oder Sonneneinstrahlung herangezogen werden, um eine von einer Transportkältemaschine einzubringende und/oder abzuführende Wärme für zumindest eine erste zu befahrende Strecke und damit einen Energiebedarf zu bestimmen.

Der prognostizierte Energiebedarf basiert zumindest teilweise auf zumindest einem angenommenen Fahrerverhalten,

Ein angenommenes Fahrerverhalten betrifft insbesondere eine Bedienung des Straßennutzfahrzeugs durch einen Fahrer. Der Fahrer kann das Nutzfahrzeug beispielsweise schnell oder langsam bewegen, kann Türen zu temperierten Laderäumen betätigen (z.B. öffnen und/oder schließen), kann das Straßennutzfahrzeug mit einem Energieversorgungsnetz verbinden und/oder tanken, kann einen Setpoint (z.B. Solltemperatur) einstellen, das Fahrzeug entlang einer vorgegebenen Route führen oder davon abweichen, Stopps wie vorgegeben durchführen oder abweichende Orte zum verweilen auswählen und/oder Stopps auslassen und/oder Kombinationen hieraus.

Ein angenommenes Fahrerverhalten kann beispielsweise einem optimalen Fahrerverhalten entsprechen (z.B. Anschluss des Straßennutzfahrzeugs an alle Lademöglichkeiten, minimale Türöffnungszeiten, exakte Einhaltung einer vorgegebenen Route und/oder Abfahrtzeiten und/oder Pausenzeiten, und/oder Kombinationen hieraus). Ein angenommenes Fahrerverhalten kann alternativ oder zusätzlich ein durchschnittliches Fahrerverhalten sein, z.B. ein Durchschnitt über Fahrerverhalten von mehreren, voneinander verschiedenen Fahrern, z.B. über (z.B. jeweils) mehrere, z.B. zumindest 2, 3, 4, 5, 10, 15, 20, 30, 40, 50, 100 oder mehr Fahrten und/oder Strecken.

Es wurde erkannt, dass das Fahrerverhalten einen nicht unwesentlichen Einfluss auf den Energiebedarf der Transportkältemaschine aufweist und es deshalb vorteilhaft ist, dieses bei der Prognose eines Energiebedarfs mit einzubeziehen.

Gemäß einem Ausführungsbeispiel des ersten beispielhaften Aspekts wird vorgeschlagen, dass der Energiebedarf prognostiziert wird basierend auf einer Prognose eines Energieverbrauchs und einer Prognose einer Energiegewinnung.

Es ist erkannt worden, dass heutige Transportkältemaschinen nicht nur Energie verbrauchen (also für eine Temperierung eines Innenraums, insbesondere Laderaums des Straßennutzfahrzeugs aufwenden). Stattdessen können heutige Transportkältemaschinen und/oder Straßennutzfahrzeuge auch in Verbindung mit Energiegewinnungseinrichtungen betrieben werden, z.B. ein oder mehrere Solarmodule und/oder Rekuperationsvorrichtungen (z.B. hierfür vorgesehenen Generatorachsen und/oder Rekuperationsbremsen). Auch können Transportkältemaschinen und/oder Straßennutzfahrzeuge an ein Energieversorgungsnetz (z.B. eine Ladestation) angeschlossen werden und hierdurch Energie aufnehmen. Beispielsweise kann die Energie in einem Energiespeicher der Transportkältemaschine und/oder des Straßennutzfahrzeuges gespeichert werden.

Der prognostizierte Energiebedarf kann somit als eine Differenz aus Energieverbrauch und Energiegewinnung bestimmt werden. Alternativ kann der Energiebedarf (z.B. nur) den Energieverbrauch betreffen und/oder den Energieverbrauch abzüglich Energiegewinnung aus einem Solarmodul und/oder einer Rekuperationvorrichtung. Ein Energiebedarf kann somit beispielsweise eine Notwendigkeit angeben, während und/oder vor der zumindest einen ersten Strecke einen Speicher, z.B. einen Kraftstoffspeicher und/oder einen elektrischen Energiespeicher, zu leeren und/oder zu befüllen.

Beispielsweise kann durch Fahrerverhalten (z.B. Fahrt auf ebenem Terrain, Fahrt durch sonnige Bereiche, Abstellen derart, dass Sonnenlicht auf das Solarmodul fällt, Anschließen des Straßennutzfahrzeugs an eine Ladeinfrastruktur, Vorkühlen einer Ladung des Straßennutzfahrzeugs in einem Netzbetrieb der Transportkältemaschine, Aufladung eines Energiespeichers (z.B. der Transportkältemaschine und/oder des Straßennutzfahrzeugs) (z.B. vor Fahrtantritt), zügiges Schließen von Türen zum temperierten Laderaum und/oder Kombinationen hieraus) der Energiebedarf für eine gegebene zumindest eine erste Strecke gesenkt werden und/oder bei gegenteiligem Fahrerverhalten erhöht werden. Beispielsweise kann dies durch Erhöhung der Energiegewinnung und/oder durch Senkung des Energieverbrauchs geschehen.

Gemäß einem Ausführungsbeispiel des ersten beispielhaften Aspekts wird vorgeschlagen, dass der Energiebedarf, insbesondere der Energieverbrauch, prognostiziert wird zumindest teilweise basierend auf Nutzerdaten, wobei die Nutzerdaten insbesondere zumindest eines der Folgenden umfassen:

- Routeninformationen zu der zumindest einen ersten zu befahrenden Strecke, insbesondere Informationen zu einem Startpunkt und/oder einem Endpunkt, Informationen zu zumindest einem Koordinatenverlauf der zumindest einen ersten zu befahrenden Strecke (z.B. in Form von Längen- und/oder Breitengrad und/oder Höheninformationen, beispielsweise Reliefenergie und/oder Höhenmeter der zurückzulegenden Strecke),
- zumindest einem Zwischenstopp (z.B. mit oder ohne Türöffnung, z.B. Fahrpause oder Ent-/Verladestopp auf der zumindest einen ersten zu befahrenden Strecke,
- zumindest einem Temperatur-Setpoint, insbesondere einer zulässigen Abweichungen von dem Temperatur-Setpoint,
- zumindest einer Art und/oder einem Wert einer zu transportierenden Ware, und/oder
- zumindest einem Optimierungsziel (z.B. einer Routenplanung und/oder einer Steuerung der Transportkältemaschine), insbesondere eines von Energie-Effizienz, CO2-Einsparung, Wirtschaftlichkeit, Laufzeit, Temperaturführung, und/oder Bauteilverschleiß.

Nutzerdaten können insbesondere Daten sein, welche ein Nutzer, insbesondere ein Flotten-Manager und/oder ein Planer einer Logistikbetriebs, welches sich des anmeldungsgemäßen Straßennutzfahrzeugs bedient, bereitstellt. Auch können Nutzerdaten von dem Fahrer bereitgestellt werden, welcher somit als Nutzer auftreten kann.

Der Nutzer kann vorgaben zum Betrieb des Straßennutzfahrzeugs und/oder der Transportkältemaschine machen. Beispielsweise kann der Nutzer bestimmen, welche Route eingeschlagen werden soll, welche Zwischenstopps zu tätigen sind und welche Temperaturen im Laderaum des Straßennutzfahrzeugs herrschen sollen (z.B. und mit welcher Toleranz).

Insbesondere eine Änderung der Ladung des Straßentransportfahrzeugs (z.B. Beladung und/oder Entladung) kann einen Einfluss auf den Energiebedarf der Transportkältemaschine haben. Beispielsweise kann für die Be-/Entladung eine Öffnung der Laderaums des Straßennutzfahrzeugs notwendig sein, wodurch nicht temperierte Luft in den Laderaum eindringen kann. Auch kann beispielsweise ein erhöhtes Leervolumen entstehen, eine Unterteilung des Straßennutzfahrzeugs aufgehoben oder eingerichtet werden (z.B. falls zwei oder mehr verschieden zu temperierten Waren transportiert wurden oder werden) und/oder es können Waren aufgenommen werden, welche zunächst auf eine jeweilige Zieltemperatur temperiert werden müssen.

Ferner kann die Art einer Be- und/oder Entladung, insbesondere deren Dauer (z.B. einer Türöffnung) und/oder eine Verfügbarkeit einer externen Energiequelle während des Vorgangs, einen Energiebedarf der Transportkältemaschine beeinflussen.

Nutzerdaten können ein Optimierungsziel vorgeben, welches Beispielsweise eine Routenplanung und/oder einen Betriebsmodus des Straßennutzfahrzeugs und/oder der Transportkältemaschine betrifft. Beispielsweise kann ein Optimierungsziel besonders akkurater Temperaturführung zu einem erhöhten Energieverbrauch und damit Energiebedarf führen, während ein Optimierungsziel Energie-Effizienz das Gegenteil bewirkt. Dies kann in die Prognose des Energiebedarfs mit einfließen.

Ein angenommenes Fahrerverhalten kann herangezogen werden, um den Energiebedarf, insbesondere den Energieverbrauch, zu prognostizieren. Z.B. kann eine Dauer eines Be-/Entladevorgangs, eine Türöffnungsdauer, eine Vorkühlung von zu transportierenden Waren, eine Einhaltung einer vorgesehenen Route und/oder Kombinationen hieraus zu einer Prognose des Energiebedarfs, insbesondere des Energieverbrauchs, führen.

Gemäß einem Ausführungsbeispiel des ersten beispielhaften Aspekts wird vorgeschlagen, dass der Energiebedarf, insbesondere der Energieverbrauch, prognostiziert wird zumindest teilweise basierend auf Telematikdaten, wobei die Telematikdaten insbesondere zumindest eines der folgenden umfassen:

- zumindest einer Ist-Temperaturen zumindest eines Teils eines Laderaums des Straßennutzfahrzeugs (z.B. Kammer),
- zumindest einer Setpoint zumindest eines Teils eines Laderaums des Straßennutzfahrzeugs (z.B. Kammer),
- zumindest einem Türstatus des Straßennutzfahrzeugs,
- zumindest einem Generator Modus des Straßennutzfahrzeugs,
- zumindest einer Achslast des Straßennutzfahrzeugs, und/oder
- zumindest einer Isolationsgüte zumindest eines Laderaums des Straßennutzfahrzeugs (z.B. K-Wert (inkl. Alterung)).

Telematikdaten können insbesondere Daten sein, welche (z.B. automatisiert und/oder sensorbasiert und/oder modellbasiert) von dem Straßennutzfahrzeug und/oder der Transportkältemaschine erfasst und/oder bereitgestellt werden. Alternativ oder zusätzlich können Telematikdaten Daten betreffen, welche das Straßennutzfahrzeug und/oder die Transportkältemaschine empfangen, z.B. mittels einer Telematikeinrichtung, z.B. von einem Server.

Gemäß einem Ausführungsbeispiel des ersten beispielhaften Aspekts wird vorgeschlagen, dass der Energiebedarf, insbesondere der Energieverbrauch, prognostiziert wird zumindest teilweise basierend auf einem der Folgenden (z.B. Online-Information, z.B. Echtzeit-Daten):

- zumindest einem Wetterdatum, insbesondere zumindest einem von Temperatur, Luftfeuchtigkeit, Sonneneinstrahlung und/oder astronomischer Luftmasse, zu der zumindest einen ersten zu befahrenden Strecke, und/oder
- zumindest einer Verkehrsinformation, insbesondere zumindest einem von (z.B. aktueller) Geschwindigkeit (z.B. durch Stau) und/oder zumindest einem (z.B. aktuellem) Haltepunkt der zumindest einen ersten zu befahrenden Strecke (z.B. Ampel, Kreuzung und/oder Kombinationen hieraus).

Die in diesem Ausführungsbeispiel genannten Daten können unter dem Oberbegriff Online-Daten und/oder Echtzeit-Daten gefasst werden und betreffen Daten, welche das Straßennutzfahrzeug und/oder die Transportkältemaschine aus Informationsquellen beziehen kann, welche aktuelle Informationen bereitstellen, insbesondere betreffend die zumindest eine erste Strecke. Beispielsweise können die Online-Daten von Dritten Parteien (weder Flottenbetreiber noch Fahrzeuganbieter) stammen, z.B. von zumindest einem Wetterdienst und/oder zumindest einem Kartendienstleister.

Beispielsweise kann für die Prognose des Energiebedarfs bekannt sein, dass eine besonders hohe Temperatur einen hohen Energieverbrauch der Transportkältemaschine zur Folge haben wird. Beispielsweise kann eine Etappe besonders hoher Anforderungen (z.B. durch einen wenig bewachsenen und/oder nicht schattierten Abschnitt) an einem besonders warmen und/oder sonnigen Tag als besonders energiebedarfssteigernd bestimmt werden.

Zusätzlich kann bekannt sein, dass eine hohe Sonneneinstrahlung eine hohe Energiegewinnung durch das Solarmodul zur Folge haben wird. Beispielsweise kann andererseits bekannt sein, dass ein Stau in einem Tunnel, einer Innenstadt und/oder einem Waldstück mit geringer Sonneneinstrahlung einer Energiegewinnung per Solarmodul entgegenwirkt.

Online-Daten können beispielsweise über eine Kommunikationsverbindung zu zumindest einer von dem Straßennutzfahrzeug verschiedenen, z.B. stationären, Einrichtung erfolgen, beispielsweise einen Server, beispielsweise über das Internet. Das Straßennutzfahrzeug und/oder die Transportkältemaschine kann hierzu geeignete Kommunikationsmittel aufweisen.

Gemäß einem Ausführungsbeispiel des ersten beispielhaften Aspekts wird vorgeschlagen, dass der Energiebedarf, insbesondere die Energiegewinnung, prognostiziert wird basierend auf zumindest einem der Folgenden

- zumindest einen Ladezustand eines Energiespeichers, insbesondere eines Hochvolt-Energiespeichers, des Straßennutzfahrzeugs,
- zumindest eine Temperatur eines Energiespeichers, insbesondere eines Hochvolt-Energiespeichers, des Straßennutzfahrzeugs,
- einer Rekuperationsenergieprädiktion, insbesondere wobei die Rekuperationsenergieprädiktion basierend auf Topografie- und/oder Verkehrsinformationen zu der zu zumindest einen ersten zu befahrenden ersten Strecke bestimmt wird,
- einer Solarenergieprädiktion, insbesondere wobei die Solarenergieprädiktion basierend auf Wetter- und/oder Topografieinformationen (z.B. Schattierung einer Strecke) zu der zu zumindest einen ersten zu befahrenden ersten Strecke bestimmt wird,
- einer Ladeenergieprädiktion, insbesondere wobei die Ladeenergieprädiktion basierend auf einer (z.B. (Echtzeit-) Verfügbarkeit einer) Infrastruktur und/oder Standzeit während der zumindest einen ersten zu befahrenden ersten Strecke bestimmt wird, und/oder
- zumindest eines Strompreises (z.B. während einer Befahrung der zumindest einen ersten zu befahrenden Strecke).

Zur Bestimmung des Energiebedarfs, insbesondere der Energiegewinnung, können beispielsweise interne und/oder externe Energiequellen und/oder Energiespeicher betrachtet werden.

Ein Ladezustand eines Energiespeichers (z.B. State of Charge, SOC) kann beispielsweise informativ dafür sein, wie viel Energie aus dem Energiespeicher gewonnen werden und/oder wie viel (z.B. zusätzliche) Energie zwischengespeichert werden kann. Bei hohem Ladezustand des Energiespeichers kann beispielsweise ein prognostizierter Energiebedarf geringer angesetzt werden als bei einem leeren Energiespeicher. Ein Ladezustand kann beispielsweise von einem Fahrerverhalten abhängen, z.B. einem (Unterlassen eines) Aufladen(s) eines Energiespeichers (z.B. vor Fahrtantritt).

Eine Rekuperationsenergieprädiktion kann beispielsweise angeben, wie viel Energie durch Rekuperation gewonnen werden kann, z.B. während einem Befahren zumindest einer der zumindest einen ersten Strecke. Beispielsweise kann das Straßennutzfahrzeug eine Rekuperation von Bremsenergie erlauben. Beispielsweise kann damit auf Strecken, welche viele Geschwindigkeitswechsel aufweisen (z.B. Stadtverkehr oder auch Phasen längerer Bremsmanöver wie abschüssige Strecken) mit einer erhöhten Rekuperationsenergie gerechnet werden als auf Strecken konstanter Geschwindigkeit (z.B. Autobahn). Eine Rekuperationsenergieprädiktion kann basieren auf einem angenommenen Fahrerverhalten, beispielsweise auf einem Einhalten einer Route (z.B. Stadt oder Berge) oder auf einer angenommenen Gleichmäßigkeit der Geschwindigkeit prognostiziert werden.

Eine Solarenergieprädiktion kann beispielsweise eine elektrische Energie angeben, welche mittels eines oder mehrerer Solarmodule gewonnen werden, z.B. während einem Befahren zumindest einer der zumindest einen ersten Strecke. Die Solarenergieprädiktion kann abhängen von aktuellen Wetterverhältnissen (z.B. bekannt aus Online-Daten), beispielsweise Bewölkung oder Sonnigkeit. Die Solarenergieprädiktion kann abhängen von einer Schattierung zumindest einer der zumindest einen ersten Strecke, zum Beispiel durch einen Wald, Gebäude oder Berge. Die Solarenergieprädiktion kann beispielsweise mit einem Ladezustand zumindest eines Energiespeichers zusammenhängen. Beispielsweise kann eine Solarenergieprädiktion höher ausfallen, wenn der Energiespeicher leerer ist, da hierbei elektrische Solarenergie nicht sofort verwendet werden muss (zum Betreiben der Transportkältemaschine) sondern für spätere Verwendung flexibel einsetzbar bleibt. Beispielsweise kann die Solarenergieprädiktion auf einem angenommenen Fahrerverhalten basieren. Z.B. kann dies ein Abstellen des Straßennutzfahrzeugs (z.B. während einer Fahrtpause) in einem sonnigen Bereich sein, sodass das Solarmodul elektrische Energie produziert. Auch kann dies ein Einhalten einer vorgegebenen Route (durch z.B. nicht-schattierte Bereiche) sein.

Auch kann eine Ladeenergieprädiktion herangezogen werden für eine Prognose eines Energiebedarfs. Beispielsweise kann die Ladeenergieprädiktion basieren auf einer Verfügbarkeit einer Energieversorgungsintrastruktur wie z.B. einer Ladeinfrastruktur, einer Oberleitung, einer induktiven Fahrbahn und/oder Kombinationen hieraus. Beispielsweise kann einer Ladeenergieprädiktion ein angenommenes Fahrerverhalten zugrunde liegen, z.B. ein Anschließen des Straßennutzfahrzeugs oder der Transportkältemaschine an eine Energiequelle, ein Ausfahren eines Stromabnehmers und/oder ein Befahren einer induktiven Fahrbahn.

Ein Strompreis kann z.B. dafür herangezogen werden, ob es wirtschaftlich ist, eine Straßennutzfahrzeug in einer gegebenen Zeit und/oder an einem gegebenen Ort zu laden oder nicht. Beispielsweise kann der Strompreis in einem Land (z.B. morgens) besonders hoch sein, sodass eine Aufladung während dieser Zeit in diesem Land nicht wirtschaftlich ist. Entsprechend kann eine Energiegewinnung (z.B. während der zumindest einen ersten Strecke) als geringer prognostiziert werden und ein Energiebedarf als höher.

Gemäß einem Ausführungsbeispiel des ersten beispielhaften Aspekts wird vorgeschlagen, dass das angenommene Fahrerverhalten zumindest eines der folgenden umfasst:

- Anschluss des Straßennutzfahrzeugs an eine Energieversorgungsinfrastruktur (z.B. während einer Fahrpause, Wahl einer Art des Anschlusses, Dauer des Anschlusses, Häufigkeit/ Anzahl der Anschlüsse, Durchführung eines retardierten Anschlusses, z.B. falls Ladepunkt bei Beginn einer Fahrpause belegt und frei wird),
- Türöffnungsverhalten zumindest einer Tür zu einem (z.B. temperierten) Laderaum des Straßennutzfahrzeugs, insbesondere Dauer und/oder Häufigkeit von Türöffnungen,
- Einhaltung einer vorgegebenen Strecke (z.B. durch schattige und/oder flache Gebiete, um Städte, Stopps an Stellen, die eine Ladeinfrastruktur bieten),
- Einhaltung eines vorgesehenen Stopps (z.B. wo eine Ladeinfrastruktur verfügbar ist),
- Einhaltung einer vorgesehenen Abfahrtszeit (z.B. Tageszeit),
- Vorkühlen (z.B. vor Fahrtantritt, z.B. mittels Energie aus einem Netzanschluss, CEE Energie) einer Warenladung des Straßennutzfahrzeugs, und/oder
- Vorladung zumindest eines Energiespeichers.

Ein Fahrerverhalten kann z.B. einen Anschluss des Straßennutzfahrzeugs und/oder der Transportkältemaschine an eine Energieversorgungsinfrastruktur umfassen. Z.B. kann der Anschluss während einer Fahrpause vorgenommen werden. Beispielsweise kann eine bestimmte Art von Anschluss gewählt werden, z.B. eine reguläre 230V 50Hz CEE Steckdose in Deutschland, ein Dreiphasen-Starkstrom-Anschluss oder eine Ladestation für Elektrofahrzeuge. Beispielsweise kann eine Ladestation ausgebildet sein als ein Type 1 J1772, Type 2 Mennekes, CHAdeMo, CCS Combo Type 1, CCS Combo Type 2, GB/T oder Supercharger Ladestecker. Ferner kann das Fahrerverhalten eine Dauer des Anschlusses betreffen (z.B. zumindest 5min, 15min, 30min, 1h, 2h, 3h), eine Häufigkeit (z.B. relativ zu einer Anzahl von Fahrpausen und/oder während eines Befahrens einer der zumindest einen ersten Strecke.

Ein Fahrerverhalten kann z.B. eine Durchführung eines retardierten Anschlusses an eine Energieversorgungsinfrastruktur betreffen. Beispielsweise kann ein Anschluss (z.B. Ladepunkt) belegt sein, z.B. zu Beginn einer Fahrpause. Ein Fahrer kann daraufhin einen Stellplatz ohne Lademöglichkeit aufsuchen und für die gesamte Dauer der Fahrpause keine Energie beziehen. Alternativ kann der Fahrer bei Freiwerden des Anschlusses einen Ladevorgang beginnen (z.B. oder nicht).

Beispielsweise kann ein Fahrerverhalten basierend auf einer jeweiligen Möglichkeit der Durchführung des Fahrerverhaltens bestimmt werden. Z.B. kann ein Unterlassen eines Anschlusses an eine Energieversorgungsinfrastruktur nur dann als Unterlassen gewertet werden, wenn bekannt ist, dass ein Anschluss möglich ist und nicht, wenn bekannt ist, dass ein Anschluss unmöglich ist (z.B. weil entsprechende Anschlussmöglichkeiten belegt sind).

Ein Fahrerverhalten kann z.B. ein Türöffnungsverhalten zumindest einer Tür zu einem Laderaum des Straßennutzfahrzeugs betreffen. Z.B. kann dies eine Dauer und/oder Häufigkeit von Türöffnungen betreffen, beispielsweise während und/oder unabhängig von Be- und/oder Entladevorgängen.

Ein Fahrerverhalten kann z.B. eine Einhaltung einer vorgegebenen Strecke betreffen. Die Strecke kann beispielsweise derart bestimmt worden sein, dass diese günstig ist für z.B. eine Energiegewinnungsmethode (z.B. Solar und/oder Rekuperation und/oder zur Aufladung an Energieversorgungsinfrastruktureinrichtungen). Eine Einhaltung kann die vorgesehene Energiegewinnung ermöglichen, eine Abweichung diese verhindern.

Ein Fahrerverhalten kann z.B. eine Einhaltung einer vorgegebenen Abfahrtszeit betreffen. Beispielsweise kann eine Abfahrtszeit besonders günstig für eine Energiebilanz der Transportkältemaschine sein, z.B. weil Sonnenlicht zur Solarenergiegewinnung genutzt werden kann und/oder weil Verzögerungen durch Staus vermieten werden. Eine Nicht-Einhaltung der Abfahrtszeit kann demnach zu einer Erhöhung des Energiebedarfs führen.

Beispielsweise kann ein Fahrerverhalten auch eine Einhaltung eines vorgesehenen Stopps (z.B. einer Position eines jeweiligen Stopps (z.B. Rastplatz, Tankstelle);und/oder z.B. einer Dauer eines jeweiligen Stopps) (z.B., für eine Fahrpause) betreffen. Beispielsweise kann eine Route derart bestimmt sein, dass eine Fahrpause an einer Halteposition durchgeführt wird, an der sich eine Ladeinfrastruktur befindet. Eine Wahl dieser Halteposition durch den Fahrer kann angenommen werden, beispielsweise in zumindest einem Bruchteil der Fahrpausen der zumindest einen ersten Strecke, z.B. für 30%, 50%, 70%, 80%, 90% oder 95% der Fahrpausen.

Ferner kann ein Fahrverhalten ein Vorkühlen einer Warenladung des Straßennutzfahrzeugs betreffen, z.B. vor Fahrtantritt der zumindest einen ersten Strecke und/oder mittels Energie aus einer Energieversorgungsinfrastruktur, insbesondere aus einem Netzanschluss, CEE, und/oder einer Ladestation.

Ferner kann ein Fahrverhalten ein Vorladung zumindest eines Energiespeichers betreffen, z.B. vor Fahrtantritt der zumindest einen ersten Strecke und/oder mittels Energie aus einer Energieversorgungsinfrastruktur, insbesondere aus einem Netzanschluss, CEE, und/oder einer Ladestation.

Gemäß einem Ausführungsbeispiel des ersten beispielhaften Aspekts, wird vorgeschlagen, dass die Hochspannungs-Energiequelle ein Generator ist, insbesondere ein mit einem Brennstoff, insbesondere einem fossilen Brennstoff, betriebener Generator, insbesondere ein Dieselgenerator, und/oder wobei die Hochspannungs-Energiequelle ein Hochspannungs-Akkumulator ist und/oder wobei die Hochspannungs-Energiequelle einen Energieversorgungsanschluss, insbesondere eine Ladebuchse, insbesondere für eine Ladeinfrastruktur, und/oder eine Drehstromsteckdose umfasst.

Gemäß einem Ausführungsbeispiel des ersten beispielhaften Aspekts, wird vorgeschlagen, dass das Straßennutzfahrzeug zumindest einen Anhänger für Straßennutzfahrzeuge umfasst oder ein solcher Anhänger ist.

Gemäß einem zweiten beispielhaften Aspekt wird ein Verfahren zum Betreiben eines Straßennutzfahrzeugs, insbesondere nach dem ersten Aspekt, vorgeschlagen, wobei das Straßennutzfahrzeug eine Transportkältemaschine umfasst mit zumindest einen Lüfter (z.B. einen Verdampferlüfter, Kondensatorlüfter und/oder Motorraumlüfter), wobei der zumindest eine Lüfter dazu eingerichtet ist, in einem 48V-Spannungsband mit elektrischer Energie betrieben zu werden (z.B. über einen DC/AC-Wandler, welcher dazu eingerichtet ist, 48V DC in eine Wechselspannung für den Lüfter zu wandeln; z.B. ist der DC/AC-Wandler Teil des Lüfters), mit zumindest einer temperaturbeeinflussenden Komponente (z.B. kälteerzeugend, z.B. Teil eines Kältemittelkreislaufs, z.B. Kompressor und/oder wärmeerzeugend, z.B. Heizstab), eingerichtet zur Temperierung eines Frachtraums des Straßennutzfahrzeugs, wobei die zumindest eine temperaturbeeinflussende Komponente dazu eingerichtet ist, in einem Hochspannungsband mit elektrischer Energie versorgt zu werden, und mit einer Hochspannungs-Energiequelle (z.B. 400V AC; z.B. Generator/HV-Akkumulator), wobei die Hochspannungs-Energiequelle dazu eingerichtet ist, zumindest eines der (z.B. und zumindest phasenweise beide der) zumindest einen temperaturbeeinflussenden Komponente der Transportkältemaschine und des zumindest einen Lüfters mit elektrischer Energie zu versorgen, wo bei das Straßennutzfahrzeug ferner eine 48V-Hilfsenergiequelle umfasst (z.B. Solarmodul, z.B. umfassend zumindest einen oder mehrere Spannungswandler und/oder einen elektrischen Energiespeicher, z.B. Akkumulator), wobei die 48V-Hilfsenergiequelle dazu eingerichtet ist, in dem 48V-Spannungsband elektrische Energie mit einer (z.B. zeitlich variablen) Hilfsleistung bereitzustellen, wobei die 48V-Hilfsenergiequelle dazu eingerichtet ist, zumindest einen der zumindest einen Lüfter (z.B. (nur) den Verdampferlüfter oder den Verdampferlüfter und zumindest einen der Kondensatorlüfter oder Motorraumlüfter) mit elektrischer Energie zu versorgen, wobei das Verfahren umfasst

- Freihalten der zumindest einen temperaturbeeinflussenden Komponente von einer elektrischen Energieversorgung durch die 48V-Hilfsenergiequelle (und/oder aus dem 48V-Spannungsband) (z.B. unidirektionaler Wandler und/oder anderes Spannungsband, und/oder AC vs DC),
- Versorgen, in einem Hilfsbetriebsmodus, zumindest teilweise, zumindest eines der zumindest einen Lüfter (z.B. zusätzlich zu einer Versorgung ausgehend von der Hochspannungs-Energiequelle) ausgehend von der 48V-Hilfsenergiequelle mit elektrischer Energie (z.B. und/oder elektrische Leistung aus der 48V-Hilfsenergiequelle in das 48V-Spannungsband einzuspeisen).

Gemäß einem Ausführungsbeispiel des zweiten beispielhaften Aspekts, wird vorgeschlagen, dass der Hilfsbetriebsmodus einem Boost-Modus entspricht, in welchem die zumindest eine temperaturbeeinflussende Komponente (z.B. nur) ausgehend von der Hochspannungs-Energiequelle mit elektrischer Energie versorgt wird (z.B. wobei die Hochspannungs-Energiequelle mit ihrer Maximalleistung läuft).

Gemäß einem Ausführungsbeispiel des zweiten beispielhaften Aspekts, wird vorgeschlagen, dass der Hilfsbetriebsmodus einem Teillast-Modus entspricht, in welchem die zumindest eine temperaturbeeinflussende Komponente (z.B. im Wesentlichen oder vollständig) deaktiviert (z.B. frei von jeglicher Energieversorgung und/oder Energieaufnahme) ist und/oder die Hochspannungs-Energiequelle (z.B. im Wesentlichen oder vollständig) keine Leistung bereitstellt (und/oder die zumindest eine temperaturbeeinflussende Komponente frei von einer Versorgung mit elektrischer Energie ausgehend von der Hochspannungs-Energiequelle ist).

Gemäß einem Ausführungsbeispiel des zweiten beispielhaften Aspekts, wird vorgeschlagen, dass

- der zumindest eine Lüfter zumindest einen Verdampferlüfter, zumindest einen Kondensatorlüfter und/oder zumindest einen Hochspannungs-Energiequellen-Lüfter (z.B. Motorraumlüfter) umfasst, und wobei

- in dem Teillast-Modus der zumindest eine der zumindest einen Lüfter, welcher ausgehend von der 48V-Hilfsenergiequelle mit elektrischer Energie versorgt wird, zumindest der Verdampferlüfter umfasst, insbesondere wobei der Kondensatorlüfter und/oder der Hochspannungs-Energiequellen-Lüfter frei von Versorgung mit elektrischer Energie ausgehend von der 48V-Hilfsenergiequelle ist, und/oder
- in dem Boost-Modus der zumindest eine der zumindest einen Lüfter, welcher ausgehend von der 48V-Hilfsenergiequelle mit elektrischer Energie versorgt wird, zumindest den Verdampferlüfter und zumindest einer von Kondensatorlüfter und/oder der Hochspannungs-Energiequellen-Lüfter umfasst.

Gemäß einem Ausführungsbeispiel des zweiten beispielhaften Aspekts, wird vorgeschlagen, zumindest eine temperaturbeeinflussende Komponente in Abhängigkeit von der Hilfsleistung zu steuern, insbesondere derart, dass eine Leistungsaufnahme der zumindest einen temperaturbeeinflussenden Komponente mit steigender Hilfsleistung erhöht wird.

Gemäß einem Ausführungsbeispiel des zweiten beispielhaften Aspekts, wird vorgeschlagen, die zumindest eine temperaturbeeinflussende Komponente zumindest zeitweise mit einer Leistung zu betreiben, welche um eine Überleistung oberhalb einer hilfsenergiequellenunabhängigen Maximaltemperierleistung der Hochvolt-Energiequelle (z.B. maximale Leistungsabgabe der Energiequelle (z.B. 19kW) minus Lüfterleistung (z.B. 5kW), z.B. 14kW, beispielsweise ferner minus eine Leistungsaufnahme weiterer Komponenten wie z.B. eine Ladeleistung einer (z.B. 12V-)Batterie) liegt, wobei die Überleistung abhängig von der Hilfsleistung ist, insbesondere mit steigender Hilfsleistung steigt und/oder zumindest im Wesentlichen (z.B. zu höchstens 70%, 80%, 90%, 95%) der Hilfsleistung entspricht (z.B. wobei die Leistung stets unterhalb einer maximalen Leistungsabgabe der Energiequelle liegt).

Gemäß einem Ausführungsbeispiel des zweiten beispielhaften Aspekts, wird vorgeschlagen, zumindest einen Lüfter ausgehend von der Hochspannungs-Energiequelle (z.B. im Hilfsmodus, insbesondere im Boost-Modus) mit einer Leistung zu versorgen, welche um eine Unterleistung unterhalb einer (z.B. momentanen) Leistungsaufnahme des zumindest einen Lüfters liegt, insbesondere wobei die Unterleistung betragsmäßig der Überleistung und/oder der Hilfsleistung entspricht.

Gemäß einem Ausführungsbeispiel des zweiten beispielhaften Aspekts, wird vorgeschlagen, die Hochspannungs-Energiequelle in Abhängigkeit von der Hilfsleistung zu steuern, insbesondere derart, dass eine Leistungsabgabe der Hochspannungs-Energiequelle mit steigender Hilfsleistung verringert wird.

Gemäß einem Ausführungsbeispiel des zweiten beispielhaften Aspekts, wird vorgeschlagen, die Hilfsleistung vollständig (z.B. und/oder zumindest zu 50%, 60%, 70%, 80%, 90%, 95% oder 99%) dem zumindest einen der zumindest einen Lüfter zuzuführen, welcher ausgehend von der 48V-Hilfsenergiequelle mit elektrischer Energie versorgt wird.

Gemäß einem Ausführungsbeispiel des zweiten beispielhaften Aspekts, wird vorgeschlagen, dass die Hilfsleistung

- einer momentanen Leistung des Solarmoduls entspricht,
- einer momentanen Endladeleistung des Hilfsenergiespeichers entspricht,
- einer momentanen Leistung des Solarmoduls abzüglich einer Ladeleistung des Hilfsenergiespeichers entspricht, und/oder
- einer momentanen Leistung des Solarmoduls zuzüglich einer Endladeleistung des Hilfsenergiespeichers entspricht.

Gemäß einem Ausführungsbeispiel des zweiten beispielhaften Aspekts, wird vorgeschlagen, in einem Lademodus ausgehend von der Hochspannungs-Energiequelle eine Leistung in das 48V-Spannungsband einzuspeisen, welche um eine Ladeleistung oberhalb der Leistungsaufnahme des zumindest einen Lüfters liegt um den Hilfsenergiespeicher mit der Ladeleistung aufzuladen (z.B. wenn detektiert wird, dass die Hochvolt-Energiequelle durch eine Erhöhung ihrer Leistungsabgabe (z.B. höhere Motordrehzahl) eine höhere Effizienz erreichen kann; z.B. wenn ein niedriger Ladezustand des Hilfsenergiespeichers detektiert wird; z.B. wenn eine bevorstehender erhöhter Energiebedarf prognostiziert wird).

Gemäß einem Ausführungsbeispiel des zweiten beispielhaften Aspekts, wird vorgeschlagen,

- die Ladeleistung basierend auf einem prognostizierten Energiebedarf (z.B. für eine bevorstehende oder aktuelle Fahrt) der Transportkältemaschine eingestellt wird (z.B. basierend auf Wetter, insbesondere Temperatur; basierend auf Streckeneigenschaften, beispielsweise Schatten und/oder Fahrtrichtung).

Gemäß einem dritten beispielhaften Aspekt wird eine Vorrichtung (z.B. Steuergerät der Transportkältemaschine und/oder Telematikeinheit, CTU; z.B. Teil der Transportkältemaschine und/oder Teil des Straßennutzfahrzeugs) vorgeschlagen, umfassend Mittel eingerichtet zum Steuern und/oder Ausführen eines Verfahrens nach dem zweiten beispielhaften Aspekt (beispielsweise wobei die Mittel umfassen, zumindest einen Prozessor und einen Speicher, wobei der Speicher Instruktionen umfasst, die, wenn sie von dem Prozessor ausgeführt werden, dazu führen, dass Vorrichtung das Verfahren ausführt und/oder weitere Mittel wie beispielsweise zumindest ein Kommunikationsmittel, mit dem das Steuergerät beispielsweise mit zumindest einer weiteren Komponente kommunizieren kann, beispielsweise mit der Transportkältemaschine, z.B. einem Steuergerät der Transportkältemaschine und/oder mit der Energiequelle, der zumindest einen temperaturbeeinflussenden Komponente, dem zumindest einen Lüfter, und/oder mit dem Solarmodul).

Weitere vorteilhafte beispielhafte Ausgestaltungen der Erfindung sind der folgenden detaillierten Beschreibung einiger beispielhafter Ausführungsformen der vorliegenden Erfindung, insbesondere in Verbindung mit den Figuren, zu entnehmen. Die der Anmeldung beiliegenden Figuren sollen jedoch nur dem Zwecke der Verdeutlichung, nicht aber zur Bestimmung des Schutzbereiches der Erfindung dienen. Die beiliegenden Zeichnungen sind nicht notwendigerweise maßstabsgetreu und sollen lediglich das allgemeine Konzept der vorliegenden Erfindung beispielhaft widerspiegeln.

Insbesondere sollen Merkmale, die in den Figuren enthalten sind, keineswegs jedoch als notwendiger Bestandteil der vorliegenden Erfindung erachtet werden.

Es zeigen:

Fig. 1 eine schematische Darstellung einer beispielhaften Ausführungsform eines Straßennutzfahrzeugs gemäß der Erfindung;

Fig. 2 eine schematische Darstellung einer beispielhaften Ausführungsform eines Straßennutzfahrzeugs umfassend eine Transportkältemaschine gemäß der Erfindung;

Fig. 3 eine schematische Darstellung einer beispielhaften Ausführungsform eines Straßennutzfahrzeugs umfassend eine Transportkältemaschine gemäß der Erfindung;

Fig. 4a,b eine schematische Darstellung einer beispielhaften Ausführungsform einer Betriebsart einer Transportkältemaschine gemäß der Erfindung;

Fig. 5 eine schematische Darstellung einer beispielhaften Ausführungsform einer Betriebsart einer Transportkältemaschine gemäß der Erfindung.

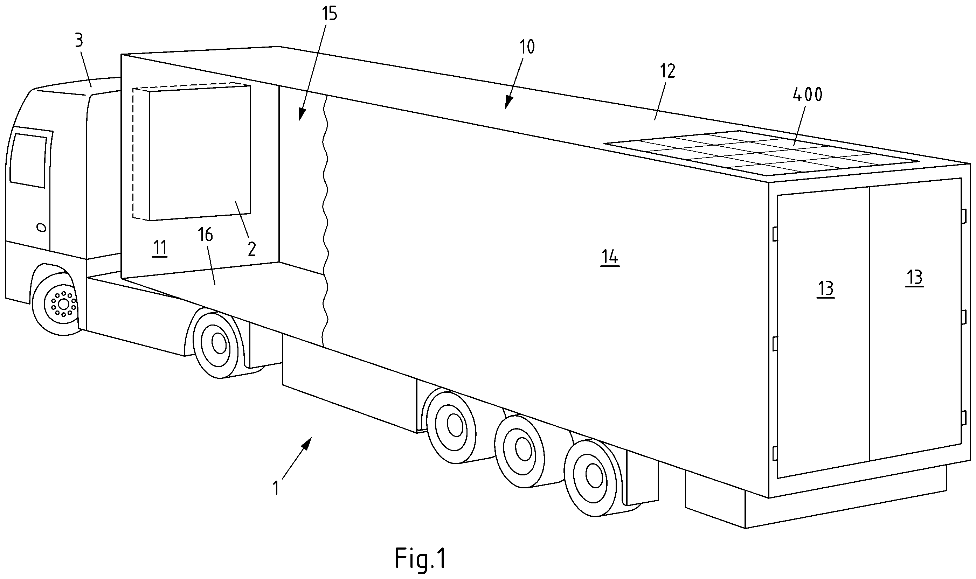

Fig. 1 ist eine schematische Darstellung einer beispielhaften Ausführungsform eines Fahrzeugs 1 gemäß der Erfindung, beispielsweise nach dem ersten Aspekt der Erfindung.

Das gezeigte Fahrzeug 1 ist ein Nutzfahrzeug 1, genauer ein Anhänger 1, genauer noch ein Sattelauflieger 1, mit einem Kofferaufbau 10. Der Kofferaufbau 10 umfasst eine feste Stirnwand 11, ein festes Dach 12, eine durch Flügeltüren 13 gebildete Rückwand und feste Seitenwände 14. Der Kofferaufbau 10 umschließt dabei einen Laderaum 15 zur Aufnahme von zu transportierenden Gütern.

In dem Fahrzeug 1 ist eine Vorrichtung 200 gemäß dem dritten Aspekt der Erfindung angeordnet, deren ungefähre Position gestrichelt angedeutet ist. Hierbei kann es sich beispielsweise um eine Telematikeinheit 200 des Anhängers 1 handeln.

Die Transportkältemaschine 2 dient zum Kühlen und/oder Heizen des Laderaums 15, so dass temperaturempfindliche Güter in dem Laderaum 15 transportiert werden können. Zu diesem Zweck kann die Transportkältemaschine 2 beispielsweise Luft kühlen und/oder heizen und anschließend in den Laderaum 15 blasen.

Auf dem Dach 12 kann zumindest ein Solarmodul und/oder ein Solarpanel 400 angeordnet sein.

Der Sattelauflieger 1 wird von einem Zugfahrzeug 3 gezogen.

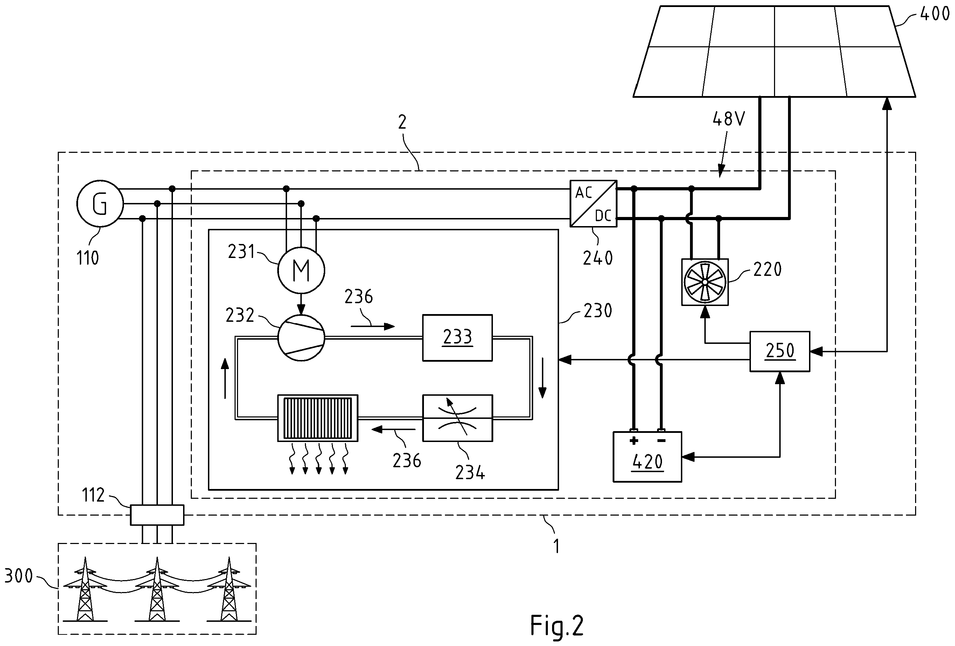

Figur 2 zeigt ein schematisches Schaltbild eines Straßennutzfahrzeugs 1 gemäß einer beispielhaften Ausführungsform gemäß der Erfindung wie es in Fig. 1 gezeigt ist.

Zu sehen ist eine Transportkältemaschine 2. Diese ist angeschlossen an eine Hochspannungs-Energiequelle 110. Die Hochspannungs-Energiequelle 110 ist in der gezeigten Ausführungsform als Generator 110 ausgebildet. Alternativ kann die Hochspannungs-Energiequelle 110 als ein Hochspannungs-Energiespeicher ausgebildet sein.

Der Generator 110 kann beispielsweise von einem Motor angetrieben werden, insbesondere von einem in der Transportkältemaschine 2 integrierten Motor, beispielsweise einem Verbrennungsmotor, insbesondere einem Dieselmotor.

Die Hochspannungs-Energiequelle 110, insbesondere der Generator 110, ist insbesondere dazu eingerichtet, elektrische Energie in Form einer Wechselspannung (z.B. eine dreiphasige Wechselspannung mit einer Spannung in Höhe von 260V bis 540 V (z.B. 400 V) (Effektivwert der verketteten Spannungen)) bereitzustellen.

Die Hochspannungs-Energiequelle 110 kann auch als Energieversorgungsanschluss 112 ausgeführt sein. Der Energieversorgungsanschluss 112 ist insbesondere dazu eingerichtet, dass Straßennutzfahrzeug 1 mit einer externen Energieversorgung 300 zu verbinden. Die externe Energieversorgung 300 kann insbesondere ein Energieversorgungsnetz umfassen. Ebenfalls kann die externe Energieversorgung 300 eine Ladeinfrastruktur umfassen. Der Energieversorgungsanschluss 112 kann beispielsweise in Form einer Steckdose, wie beispielsweise einer Drehstromsteckdose (bspw. CEE), vorgesehen sein. Auch kann der Energieversorgungsanschluss 112 die Form eines Ladeanschlusses, insbesondere einer Ladesteckers und/oder einer Ladebuchse annehmen, insbesondere eines im automobilen Bereich üblichen Ladeanschlusses.

Die Transportkältemaschine 2 ist mit der Hochspannungs-Energiequelle 110 elektrisch verbunden. Insbesondere kann diese Verbindung dreiphasig ausgeführt sein, zur Übertragung einer dreiphasigen Wechselspannung. Die jeweiligen Verbindungen können beispielsweise unmittelbar ausgeführt sein. Auch können mittelbare Verbindungen vorgesehen sein, beispielsweise über ein jeweiliges Relais.

Die Transportkältemaschine 2 umfasst zumindest eine temperaturbeeinflussende Komponente 230, insbesondere einen Kühlkreislauf 230. Auch kann als temperaturbeeinflussende Komponente ein nicht gezeigtes Heizelement vorgesehen sein. Der Kühlkreislauf 230 umfasst einen Motor 231, insbesondere ein Elektromotor, einen Kompressor 232, einen Kondensator 233, ein Drosselventil 234 und einen Wärmetauscher 235. In dem Kühlkreislauf 230 zirkuliert das Kältemittel 236. Die kälteerzeugende Komponente 230 umfasst ferner einen Kühlkreis. In dem Wärmetauscher 235 wird das zuvor verflüssigte Kältemittel 236 expandiert und entzieht dabei einem getrennt von dem Kältemittel durch den Wärmetauscher 235 geleiteten Luftstrom Wärme, so dass die Luft des Luftstroms gekühlt wird. Die gekühlte Luft dieses Luftstroms wird anschließend beispielsweise in den Laderaum 15 des Sattelaufliegers 1 geblasen, um diesen zu kühlen.

Der Motor 231 kann über einen dreiphasigen Anschluss betrieben werden. Insbesondere kann der Kühlkreislauf 230 mit einer dreiphasigen Wechselspannung (z.B. eine dreiphasige Wechselspannung mit einer Spannung in einem Hochspannungsband, insbesondere in Höhe von 260V bis 540 V (z.B. 400 V) (Effektivwert der verketteten Spannungen)), betrieben werden. Der Motor 231 kann Teil der kälteerzeugenden Komponente 230 sein.

Die Transportkältemaschine 2 umfasst ferner zumindest einen Lüfter 220. Der Lüfter 220 ist dazu eingerichtet, in einem 48V-Spannungsband mit elektrischer Energie versorgt zu werden, insbesondere mit einer Gleichspannung. Die Transportkältemaschine 2 kann insbesondere mehrere Lüfter umfassen, welche beispielsweise verschiedene Funktionen. Insbesondere kann die Transportkältemaschine zumindest einen Verdampferlüfter 220, einen Kondensatorlüfter 220 und einen Hochspannungs-Energiequellen-Lüfter 220 umfassen.

Die Transportkältemaschine umfasst einen Spannungswandler 240. Der Spannungswandler 240 ist insbesondere dazu eingerichtet, eine Wechselspannung, insbesondere eine dreiphasige Wechselspannung, insbesondere mit einer Spannung in Höhe von 260V bis 540 V (z.B. 400 V) (Effektivwert der verketteten Spannungen)), in eine Gleichspannung, insbesondere in einem 48V-Spannungsband, umzuwandeln. Auf diese Art und Weise kann der Spannungswandler 240 eine Versorgung des zumindest einen Lüfters 220 aus der Hochspannungs-Energiequelle 110 ermöglichen. Der Spannungswandler 240 ist insbesondere unidirektional und erlaubt lediglich einen Leistungsfluss ausgehend von der Wechselspannung (bzw. dem Hochspannungsband) zu der Gleichspannung (bzw. dem 48V-Spannungsband).

Das Straßennutzfahrzeug 1 kann ferner als ein erstes Beispiel einer 48V-Hilfsenergiequelle einen 48V-Hilfsenergiespeicher 420 umfassen. Der 48V-Hilfsenergiespeicher 420 ist insbesondere eine Batterie. Der 48V-Hilfsenergiespeicher 420 ist insbesondere dafür eingerichtet, in einem 48V-Spannungsband betrieben zu werden, insbesondere in diesem aufgeladen zu werden und/oder in diesem Energie bereitzustellen. Der 48V-Hilfsenergiespeicher 420 weist eine Klemmenspannung von 48V auf und/oder ist wandlerlos, stellt die Spannung im 48V-Spannungsband also ohne Spannungswandlung bereit, beispielsweise als Zellenspannung. Der 48V-Hilfsenergiespeicher 420 stellt also nativ eine Spannung im 48V-Spannungsband bereit.

Verbindungen des 48V-Spannungsbandes sind in Fig. 2 fett hervorgehoben.

Der 48V-Hilfsenergiespeicher 420 kann beispielsweise mittels des Spannungswandlers 240 ausgehend von der Hochspannungs-Energiequelle 110 aufgeladen werden. Auch kann der 48V-Hilfsenergiespeicher 420 den zumindest einen Lüfter in einem Hilfsbetriebsmodus den zumindest einen Lüfter 220 mit elektrischer Energie versorgen.

Die Transportkältemaschine 2 weist als elektrische Verbraucher unter anderem einen Anlasser auf. Auch kann zumindest eine Telematikkomponente vorgesehen sein, welche beispielsweise Teil der Transportkältemaschine 2 ist oder auch nicht Teil der Transportkältemaschine 2 ist.

Das Straßennutzfahrzeug 1 und/oder die Transportkältemaschine 2 kann ferner als eine 48V-Hilfsenergiequelle, beispielsweise alternativ oder zusätzlich zu dem 48V-Hilfsenergiespeicher, ein Solarmodul 400 vorgesehen sein. Das Solarmodul 400 kann dazu eingerichtet sein, im 48V-Spannungsband elektrische Energie bereitzustellen. Beispielsweise kann aus dem Solarmodul 400 zumindest einer der oder der zumindest eine Lüfter 220 zumindest teilweise gespeist werden und/oder der 48V-Hilfsenergiespeicher aufgeladen werden.

Die Transportkältemaschine 2 kann ferner eine Steuerungseinrichtung 250 aufweisen, beispielsweise gemäß des dritten beispielhaften Aspekts. Die Steuerungseinrichtung 250 kann beispielsweise mit zumindest einem der Lüfter 220 verbunden sein. Die Verbindung zwischen der Steuerungseinrichtung 250 und dem Lüfter 220 kann insbesondere eine Kommunikationsverbindung, insbesondere eine Steuerungsverbindung sein. Eine Steuerungsverbindung ermöglicht eine Einflussnahme seitens der Steuerungseinrichtung 250 auf den Lüfter 220. Eine Steuerungsverbindung setzt keine unmittelbare physische Verbindung zwischen den Komponenten voraus. Beispielsweise kann eine Steuerungsverbindung als eine Datenverbindung, beispielsweise über einen Datenbus, ermöglicht werden. Die Steuerungseinrichtung 250 kann den Lüfter 220 steuern. Die Steuerungseinrichtung 250 kann insbesondere zumindest einen Lüfter 220 der Transportkältemaschine 2 ausschalten und/oder anschalten. Beispielsweise kann die Steuerungseinrichtung 250 zumindest einen Lüfter 220 in seiner Lüftintensität, beispielsweise in seiner Drehzahl regulieren, insbesondere auf einen vordefinierten Wert einstellen und/oder die momentane Drehzahl erhöhen und/oder verringern.

Die Steuerungseinrichtung 250 kann beispielsweise zumindest einen Eingang umfassen. Beispielsweise kann die Steuerungseinrichtung 250 mit einem Sensor verbunden sein, insbesondere mit einem Temperatursensor. Auch kann die Steuerungseinrichtung 250 mit dem 48V-Hilfsenergiespeicher 420 und/oder dem Solarmodul 400 verbunden sein. Beispielsweise kann die Steuerungseinrichtung 250 Informationen über den Ladezustand des 48V-Hilfsenergiespeicher und/oder über die aktuelle Solarleistung des Solarmoduls 400 empfangen.

Die Steuerungseinrichtung 250 kann Einfluss nehmen auf die zumindest eine kälteerzeugende Komponente 230 der Transportkältemaschine 2. Beispielsweise kann die Steuerungseinrichtung 250 eine Kühlleistung der zumindest eine kälteerzeugenden Komponente 230 der Transportkältemaschine 2 in Abhängigkeit von der von dem Temperatursensor erfassten Temperatur steuern. Die Kühlleistung kann beispielsweise als die aus einem zu kühlenden Innenraum heraustransportierte Wärme pro Zeiteinheit bestimmt sein. Beispielsweise kann die Abweichung der von dem Temperatursensor erfassten Temperatur von einer Soll-Temperatur bestimmt werden und in Abhängigkeit von dieser Abweichung eine Kühlleistung der kälteerzeugenden Komponente 230 eingestellt werden. Die Kühlleistung kann beispielsweise mit der Leistung der kälteerzeugenden Komponente, insbesondere mit der effektiven Kühlleistung oder auch mit der aufgenommenen elektrischen Leistung korrespondieren. Die Steuerung des zumindest einen Lüfters 220 durch die Steuerungseinrichtung 250 kann ebenfalls in Abhängigkeit von einer von dem zumindest einen Temperatursensor empfangenen Temperatur geschehen.

Beispielsweise kann die Steuerungseinrichtung 250 dazu eingerichtet sein, die temperaturbeeinflussenden Komponenten der Transportkältemaschine, insbesondere den Kühlkreislauf 230, insbesondere den Motor 231, basierend auf einer Hilfsleistung, welche von dem 48V-Hilfsenergiespeicher und/oder dem Solarmodul 400 (z.B. gemeinsam) bereitgestellt wird, zu steuern. Beispielsweise kann eine Kühlleistung des Kühlkreislaufs erhöht werden, wenn eine erhöhte Hilfsleistung vorliegt, beispielsweise in einem Boost-Modus.

Die Steuerungseinrichtung 250 kann beispielsweise mit der Hochspannungs-Energiequelle 110 in Wirkverbindung stehen. Beispielsweise kann die Steuerungseinrichtung 250 die Hochspannungs-Energiequelle 110 ausschalten und/oder derart zu konfigurieren, dass diese keine elektrische Leistung bereitstellt, wenn die temperaturbeeinflussenden Komponenten der Transportkältemaschine 2 deaktiviert sind, beispielsweise insbesondere dann, wenn eine Hilfsleistung hinreichend dafür ist, zumindest einen der zumindest einen Lüfter 220, insbesondere den zumindest einen Verdampferlüfter, zu versorgen. Beispielsweise kann die Steuerungseinrichtung Hochspannungs-Energiequelle und 48V-Hilfsenergiequelle derart ansteuern, dass die von ihnen gemeinsam bereitgestellte Leistung für das Versorgen des zumindest einen (Verdampfer-)Lüfters 220 ausreicht bzw. dessen Leistungsaufnahme entspricht. Insbesondere kann eine derartige Ansteuerung im Teillastmodus erfolgen.

Die Steuerungseinrichtung 250 kann ebenfalls dazu eingerichtet sein, den Spannungswandler 240 zu steuern. Beispielsweise kann über den Spannungswandler 240 eine Leistung eingestellt werden, welche von dem Hochspannungsband in das 48V-Spannungsband übertragen wird. Beispielsweise kann hierdurch eine elektrische Leistung eingestellt werden, welche ausgehend von der Hochspannungs-Energiequelle 110 zu dem zumindest einen Lüfter 220 geliefert wird. Beispielsweise kann hierdurch eine Ladeleistung für den 48V-Hilfsenergiespeicher 420 eingestellt werden. Insbesondere kann die Ladeleistung des elektrischen Energiespeichers 420 durch den Spannungswandler 240 durch die Steuerungseinrichtung 250 in Abhängigkeit von einem Ladezustand 48V-Hilfsenergiespeichers eingestellt werden.

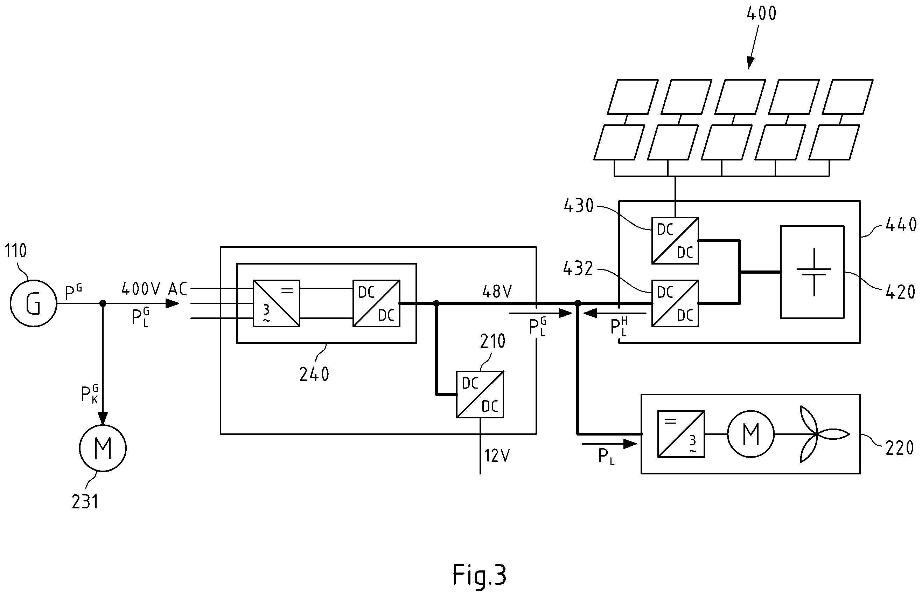

Fig. 3 zeigt einen ähnlichen Aufbau wie Fig. 2, in welchem einige weiteren Details und Leistungsflüsse eingezeichnet sind.

Erneut wird aus der Hochspannungs-Energiequelle 110 eine elektrische Leistung in einem Hochspannungsband bereitgestellt, welche mit $P^G$ bezeichnet ist. Von dieser wird mit einer Leistung $P_K^G$ zumindest eine temperaturbeeinflussende Komponente, insbesondere der gezeigte Motor 231 versorgt. Die restliche Leistung $P_L^G = P^G - P_K^G$ wird an den Spannungswandler 420 geleitet, welcher als Netzteil für das 48V-Spannungsband fungiert und diese Leistung (entsprechend seines Wirkungsgrads und abgesehen von optionalen weiteren Spannungswandlern wie dem Gleichspannungswandler 210 zu 12V) im 48V-Spannungsband bereitstellt.

Der zumindest eine Lüfter 220 nimmt eine Lüfterleistung $P_L$ auf. Beispielsweise kann der Lüfter 220 wie gezeigt ausgehend von dem 48V-Spannungsband eine 48V-Gleichspannung in eine (Dreiphasen-)Wechselspannung umwandeln, um diese seinem Motor zuzuführen. Bereitgestellt werden kann die Lüfterleistung einerseits von der Hochspannungs-Energiequelle 110 (mit Leistung $P_L^G$) und/oder von der 48V-Hilfsenergiequelle, insbesondere von dem zumindest einen Solarmodul 400 und/oder dem 48V-Hilfsenergiespeicher 420 (mit Hilfsleistung $P_L^H$): $P^L = P_L^H + P_L^G$.

Verbindungen des 48V-Spannungsbandes sind in Fig. 3 fett hervorgehoben.

Es ist erkannt worden, dass in einem Teillastmodus die gesamte Lüfterleistung von der 48V-Hilfsenergiequelle bereitgestellt werden kann. Ferner ist erkannt worden, dass durch eine zumindest teilweise Versorgung des zumindest einen Lüfters 220 ein größerer Anteil der Gesamtleistung der Hochspannungs-Energiequelle 110 $P^G$ an die temperaturbeeinflussenden Komponenten geleitet werden kann.

Fig. 3 zeigt eine beispielhafte Ausgestaltung der 48V-Hilfsenergiequelle. Ein Solarmodul 400 mit Solarpanelen 410 ist über einen Gleichspannungswandler 430 mit einem 48V-Hilfsenergiespeicher 420 verbunden. Beispielsweise kann Gleichspannungswandler 430 dazu eingerichtet sein, aus einer (z.B. zeitlich variablen) Solarspannung eine Spannung im 48V-Spannungsband zu kreieren und/oder ein Maximum Power Point Tracking (MPPT) des Photovoltaikmoduls 400 durchzuführen. Auch kann der Gleichspannungswandler 430 dazu eingerichtet zu sein, eine Ladespannung oberhalb 48V (z.B. weiterhin im 48V-Spannungsband) zu erzeugen (z.B. 50V), um den Energiespeicher aufzuladen. Gleichspannungswandler 432 kann ähnlich hierzu ausgehend von einer 48V-Spannung, welche von dem Spannungswandler 240 bereitgestellt wird, eine erhöhte Ladespannung für den 48V-Hilfsenergiespeicher 420 erzeugen. Der 48V-Hilfsenergiespeicher 420 kann beispielsweise als Puffer für das Solarmodul 400 fungieren, z.B. um in Phasen erhöhter Sonneneinstrahlung Solarenergie aufzunehmen und später abzugeben.

Alternativ kann der Gleichspannungswandler 430 und/oder Gleichspannungswandler 432 entfallen.

Das Solarmodul 400 und der 48V-Hilfsenergiespeicher 420 können beispielsweise parallelgeschaltet sein.

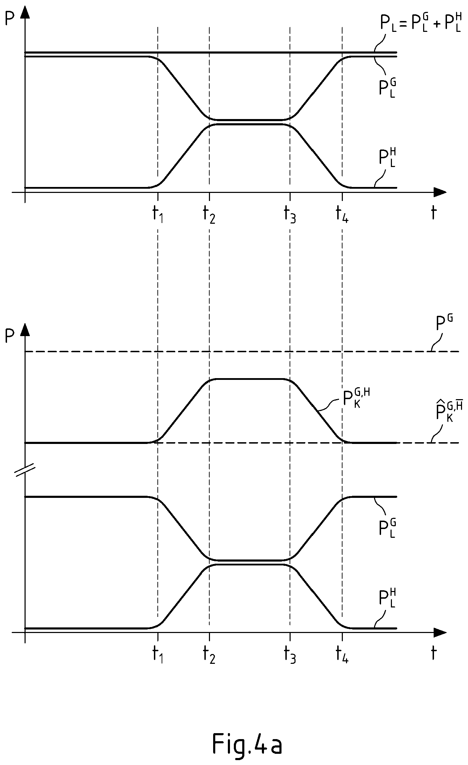

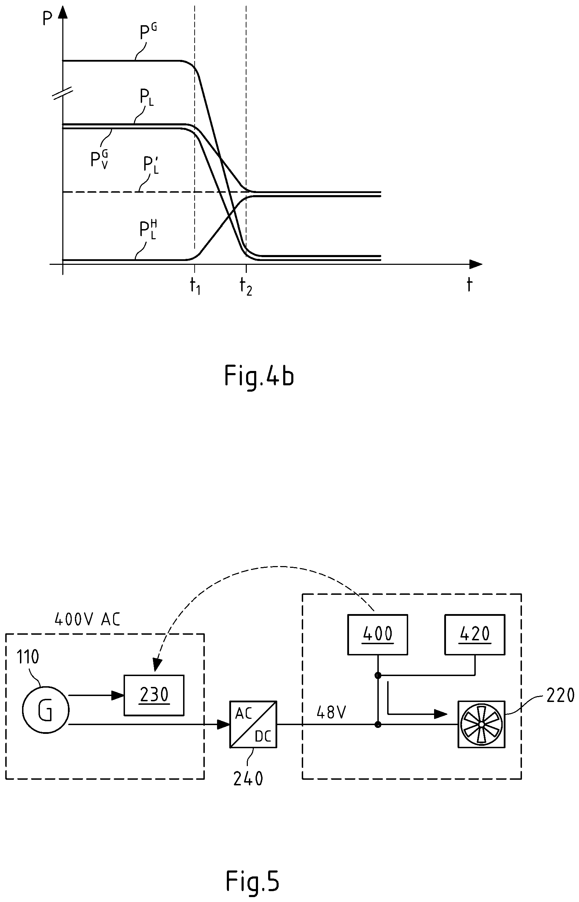

Fig. 4a und 4b zeigen Leistungsflüsse über die Zeit in zwei beispielhaften Hilfsbetriebsmodi. Die Bezeichnungen entsprechen denen der Fig. 3.

Fig. 4a zeigt einen Boost-Modus. Einer oder mehrere Lüfter werden mit einer Lüfterleistung $P^L$ betrieben, welche (siehe oben) der Summe aus der Hilfsleistung und der von der Hochspannungs-Energiequelle bereitgestellten Lüfterleistung entspricht: $P^L = P_L^H + P_L^G$. Vor einem Zeitpunkt $t_1$ ist die Hilfsleistung $P_L^H = 0$, sodass $P_L^G = P^L$ gilt. Danach, zwischen $t_1$ und $t_2$ steigt die Hilfsleistung an, um ab tz auf einem Plateauwert zu verharren. Da die Lüfterleistung im gezeigten Beispiel während dieser Veränderung (bis tz und auch darüber hinaus) unverändert bleibt, kann die von der Hochspannungs-Energiequelle bereitgestellte Leistung um den Betrag der Hilfsleistung $P_L^H$ auf $P_L^G = P_L - P_L^H$ verringert werden, ohne, dass der zumindest eine Lüfter unterversorgt ist. Ab $t_3$ bis $t_4$ verringert sich die Hilfsleistung $P_L^H$ wieder auf 0, sodass $P_L^G$ wieder auf $P_L$ ansteigt.

Wie sich in dem unteren Teil von Fig. 4a zeigt, hat die Reduktion der durch die Hochspannungs-Energiequelle bereitzustellende Leistung für den zumindest einen Lüfter $P_L^G$ Effekte für die temperaturbeeinflussenden Komponenten der Transportkältemaschine. Im Zeitraum $t_1$ bis $t_4$, insbesondere $t_2$ bis $t_3$ kann die zumindest eine temperaturbeeinflussende Komponente mit erhöhter Leistung betrieben werden. Denn die Gesamtleistung, welche die Hochspannungs-Energiequelle bereitstellt, teilt sich auf in eine Leistung für den zumindest einen Lüfter $P_L^G$ und eine Leistung für die temperaturbeeinflussenden Komponenten $P_K^G$. Anders gesagt begrenzt die von dem zumindest einen Lüfter benötigte Leistung die von den temperaturbeeinflussenden Komponenten maximal beziehbare Leistung auf die hilfsenergiequellenunabhängige Maximalleistung $\hat{P}_K^G = \hat{P}^G - P_L^G$. Das Dach deutet hierbei einen jeweiligen Maximalwert an.

Ohne 48V-Hilfsenergiequelle muss die Hochspannungs-Energiequelle den zumindest einen Lüfter betreiben, sodass $P_L^G = P_L$. Die maximal von der Hochspannungs-Energiequelle für den zumindest einen Lüfter bereitstellbare Leistung ist damit ohne Hilfsenergiequelle $\hat{P}_K^{G,\overline{H}} = \hat{P}^G - P_L$. Da nun aber mit Hilfsenergiequelle $P_L^G = P_L - P_L^H$ gilt, also zumindest ein Teil der Lüfterleistung $P_L$ von der Hilfsenergiequelle als $P_L^H$ bereitgestellt wird, erhöht sich die maximal von der Hochspannungs-Energiequelle durch die temperaturbeeinflussenden Komponenten beziehbare Leistung auf $\hat{P}_K^{G,H} = \hat{P}^G - (P_L - P_L^H) = (\hat{P}^G - P_L) + P_L^H = \hat{P}^{G,\overline{H}} + P_L^H$. Die temperaturbeeinflussenden Komponenten können somit mit einer im Wesentlichen um die Hilfsleistung (z.B. zuzüglich vermiedener Transformationsverluste vom Hochspannungsband in das 48V-Spannungsband) erhöhten maximalen Leistung $\hat{P}_K^{G,H}$ betrieben werden.

Die Erhöhung der für die temperaturbeeinflussenden Komponenten zur Verfügung Leistung im Hochspannungsband ist möglich durch eine Einspeisung von Hilfsleistung im 48V-Band. Diese ist kostengünstiger als eine Einspeisung weiterer Energie im Hochspannungsband und sicherer.

Fig. 4b zeigt dagegen einen Teillastmodus. Hierbei kann beispielsweise bis zum Zeitpunkt $t_1$ der zumindest eine Lüfter von der Hochspannungs-Energiequelle versorgt werden. Ab $t_1$ werden die temperaturbeeinflussenden Komponenten heruntergefahren. Auch Teile der Lüfter können deaktiviert werden, insbesondere der zumindest eine Kondensatorlüfter und/oder der Hochspannungs-Energiespeicher-Lüfter. Einziger verbleibender Verbraucher kann hierbei der Verdampfer-Lüfter sein, mit einer Leistungsaufnahme $P'_L$, welche deutlich geringer ist als eine vorherige Leistungsaufnahme (für $t < t_1$) der temperaturbeeinflussenden Komponenten zusammen mit den restlichen Lüftern.

Ohne 48V-Hilfsenergiequelle müsste die Hochspannungs-Energiequelle (z.B. Generator) die Leistung für den zumindest einen Verdampferlüfter bereitstellen. Jedoch ist oft die minimal mögliche Leistung, die die Hochspannungs-Energiequelle liefern kann, deutlich größer als die von den Lüftern (z.B. dem zumindest einen Verdampferlüfter) benötigte Leistung.

Die 48V-Hilfsenergiequelle kann dazu genutzt werden, im Teillastmodus die Lüfterleistung für den zumindest einen Verdampferlüfter bereitzustellen. Hierdurch ist möglich, die Hochspannungs-Energiequelle (z.B. Generator) abzuschalten, sodass die hiervon ausgehende Leistung auf 0 absinkt. Dieser Vorgang ist in Fig. 4b dargestellt.

Beispielsweise kann in der Phase vor $t_1$ ein 48V-Hilfsenergiespeicher aufgeladen werden (z.B. aus der Hochvolt-Energiequelle und/oder einem Solarmodul), um während des Teillastmodus die Lüfterleistung $P'_L$ bereitzustellen. Alternativ oder zusätzlich kann ein Solarmodul die Lüfterleistung $P'_L$ bereitstellen, beispielsweise in Kombination mit einer Entladung eines 48V-Hilfsenergiespeicher.

Fig. 5 illustriert das Wirkprinzip des Hilfsbetriebsmodus, insbesondere des Boost-Modus. Durch eine Einspeisung von elektrischer Hilfsleistung von der 48V-Hilfsenergiequelle, insbesondere dem Solarmodul 400 und/oder dem 48V-Hilfsenergiespeicher, in dem 48V-Spannungsband und eine Versorgung des zumindest einen Lüfters 220 mit elektrischer Leistung, kann indirekt die Hochspannungs-Energiequelle 110 entlastet werden. Die Energiequelle 110 kann somit gänzlich abgeschaltet werden (z.B. im Teillast-Modus) oder mit besonders hoher Leistung die temperaturbeeinflussenden Komponenten, insbesondere den Kühlkreislauf 230 betreiben. Hierzu ist kein Leistungsfluss ausgehend von dem 48V-Spannungsband (z.B. über den Spannungswandler 240) in das Hochspannungsband der Hochspannungs-Energiequelle 110 notwendig.

Die in dieser Spezifikation beschriebenen beispielhaften Ausführungsformen der vorliegenden Erfindung sollen auch in allen Kombinationen miteinander offenbart verstanden werden. Insbesondere soll auch die Beschreibung eines von einer Ausführungsform umfassten Merkmals - sofern nicht explizit gegenteilig erklärt - vorliegend nicht so verstanden werden, dass das Merkmal für die Funktion des Ausführungsbeispiels unerlässlich oder wesentlich ist. Die Abfolge der in dieser Spezifikation geschilderten Verfahrensschritte in den einzelnen Flussdiagrammen ist nicht zwingend, alternative Abfolgen der Verfahrensschritte sind denkbar - soweit nicht anders angegeben. Die Verfahrensschritte können auf verschiedene Art und Weise implementiert werden, so ist eine Implementierung in Software (durch Programmanweisungen), Hardware oder eine Kombination von beidem zur Implementierung der Verfahrensschritte denkbar.

In den Patentansprüchen verwendete Begriffe wie "umfassen", "aufweisen", "beinhalten", "enthalten" und dergleichen schließen weitere Elemente oder Schritte nicht aus. Unter die Formulierung "zumindest teilweise" fallen sowohl der Fall "teilweise" als auch der Fall "vollständig". Die Formulierung "und/oder" soll dahingehend verstanden werden, dass sowohl die Alternative als auch die Kombination offenbart sein soll, also "A und/oder B" bedeutet "(A) oder (B) oder (A und B)". Eine Mehrzahl von Einheiten, Personen oder dergleichen bedeutet im Zusammenhang dieser Spezifikation mehrere Einheiten, Personen oder dergleichen. Die Verwendung des unbestimmten Artikels schließt eine Mehrzahl nicht aus. Eine einzelne Komponente kann die Funktionen mehrerer in den Patentansprüchen genannten Einheiten bzw. Einrichtungen ausführen. In den Patentansprüchen angegebene Bezugszeichen sind nicht als Beschränkungen der eingesetzten Mittel und Schritte anzusehen.

**Patentansprüche**

**1.** Straßennutzfahrzeug (1) umfassend

- eine Transportkältemaschine (2) umfassend:

(i) zumindest einen Lüfter (220), wobei der zumindest eine Lüfter (220) dazu eingerichtet ist, in einem 48V-Spannungsband mit elektrischer Energie betrieben zu werden,

(ii) zumindest eine temperaturbeeinflussende Komponente, eingerichtet zur Temperierung eines Frachtraums des Straßennutzfahrzeugs, wobei die zumindest eine temperaturbeeinflussende Komponente dazu eingerichtet ist, in einem Hochspannungsband mit elektrischer Energie versorgt zu werden,

(iii) eine Hochspannungs-Energiequelle (110), wobei die Hochspannungs-Energiequelle (110) dazu eingerichtet ist, zumindest eines der zumindest einen temperaturbeeinflussenden Komponente der Transportkältemaschine (1) und des zumindest einen Lüfters (220) mit elektrischer Energie zu versorgen,

- eine 48V-Hilfsenergiequelle (400, 420), wobei die 48V-Hilfsenergiequelle (400, 420) dazu eingerichtet ist, in dem 48V-Spannungsband elektrische Energie mit einer Hilfsleistung bereitzustellen, wobei die 48V-Hilfsenergiequelle (400, 420) dazu eingerichtet ist, zumindest einen der zumindest einen Lüfter (220) mit elektrischer Energie zu versorgen,

- wobei das Straßennutzfahrzeug (1) dazu eingerichtet ist, die zumindest eine temperaturbeeinflussende Komponente frei von einer elektrischen Energieversorgung durch die 48V-Hilfsenergiequelle (400, 420) zu halten,

- wobei das Straßennutzfahrzeug dazu eingerichtet ist, in einem Hilfsbetriebsmodus zumindest einen der zumindest einen Lüfter zumindest teilweise ausgehend von der 48V-Hilfsenergiequelle (400, 420) mit elektrischer Energie zu versorgen.

2. Straßennutzfahrzeug (1) nach Anspruch 1, wobei der Hilfsbetriebsmodus einem Boost-Modus entspricht, in welchem zumindest eine der zumindest einen temperaturbeeinflussende Komponente ausgehend von der Hochspannungs-Energiequelle (110) mit elektrischer Energie versorgt wird.

3. Straßennutzfahrzeug (1) nach Anspruch 1, wobei der Hilfsbetriebsmodus einem Teillast-Modus entspricht, in welchem die zumindest eine temperaturbeeinflussende Komponente deaktiviert ist und/oder die Hochspannungs-Energiequelle (110) keine Leistung bereitstellt.

4. Straßennutzfahrzeug (1) nach einem der Ansprüche 1 bis 3, wobei

- der zumindest eine Lüfter (220) zumindest einen Verdampferlüfter, zumindest einen Kondensatorlüfter und/oder zumindest einen Hochspannungs-Energiequellen-Lüfter umfasst, und wobei

- in dem Teillast-Modus der zumindest eine der zumindest einen Lüfter, welcher ausgehend von der 48V-Hilfsenergiequelle (400, 420) mit elektrischer Energie versorgt wird, zumindest der Verdampferlüfter umfasst, insbesondere wobei der Kondensatorlüfter und/oder der Hochspannungs-Energiequellen-Lüfter frei von Versorgung mit elektrischer Energie ausgehend von der 48V-Hilfsenergiequelle (400, 420) ist, und/oder
- in dem Boost-Modus der zumindest eine der zumindest einen Lüfter, welcher ausgehend von der 48V-Hilfsenergiequelle (400, 420) mit elektrischer Energie versorgt wird, zumindest den Verdampferlüfter und zumindest einer von Kondensatorlüfter und/oder der Hochspannungs-Energiequellen-Lüfter umfasst.

5. Straßennutzfahrzeug (1) nach einem der Ansprüche 1 bis 4, wobei das Straßennutzfahrzeug dazu eingerichtet ist,

- zumindest eine der zumindest einen temperaturbeeinflussenden Komponente in Abhängigkeit von der Hilfsleistung zu steuern, insbesondere derart, dass eine Leistungsaufnahme der temperaturbeeinflussenden Komponente mit steigender Hilfsleistung erhöht wird und/oder
- die zumindest eine temperaturbeeinflussende Komponente zumindest zeitweise mit einer Leistung zu betreiben, welche um eine Überleistung oberhalb einer hilfsenergiequellenunabhängigen Maximaltemperierleistung der Hochvolt-Energiequelle liegt, wobei die Überleistung abhängig von der Hilfsleistung ist, insbesondere mit steigender Hilfsleistung steigt und/oder zumindest im Wesentlichen der Hilfsleistung entspricht.

6. Straßennutzfahrzeug (1) nach einem der Ansprüche 1 bis 5, wobei das Straßennutzfahrzeug dazu eingerichtet ist,

- den zumindest einen Lüfter ausgehend von der Hochspannungs-Energiequelle (110) mit einer Leistung zu versorgen, welche um eine Unterleistung unterhalb einer Leistungsaufnahme des zumindest einen Lüfters liegt, insbesondere wobei die Unterleistung betragsmäßig der Überleistung und/oder der Hilfsleistung entspricht und/oder
- die Hochspannungs-Energiequelle (110) in Abhängigkeit von der Hilfsleistung zu steuern, insbesondere derart, dass eine Leistungsabgabe der Hochspannungs-Energiequelle mit steigender Hilfsleistung verringert wird.

7. Straßennutzfahrzeug (1) nach einem der Ansprüche 1 bis 6, wobei das Straßennutzfahrzeug (1) dazu eingerichtet ist, die Hilfsleistung vollständig dem zumindest einen der zumindest einen Lüfter (220) zuzuführen, welcher ausgehend von der 48V-Hilfsenergiequelle (400, 420) mit elektrischer Energie versorgt wird.

8. Straßennutzfahrzeug (1) nach einem der Ansprüche 1 bis 7, wobei die 48V-Hilfsenergiequelle (400, 420) zumindest ein Solarmodul (420) umfasst, insbesondere wobei das Solarmodul (420) einen Spannungswandler umfasst, insbesondere wobei der Spannungswandler dazu eingerichtet ist, eine solarseitige Spannung in das 48V-Spannungsband zu wandeln.

9. Straßennutzfahrzeug (1) nach einem der Ansprüche 1 bis 8, wobei die 48V-Hilfsenergiequelle (400, 420) zumindest einen 48V-Hilfsenergiespeicher (420) umfasst.

10. Straßennutzfahrzeug (1) nach einem der Ansprüche 8 bis 9, wobei die Hilfsleistung

**EP 4 711 159 A1**

- einer momentanen Leistung des Solarmoduls (400) entspricht,
- einer momentanen Endladeleistung des Hilfsenergiespeichers (420) entspricht,
- einer momentanen Leistung des Solarmoduls (400) abzüglich einer Ladeleistung des Hilfsenergiespeichers (420) entspricht, und/oder
- einer momentanen Leistung des Solarmoduls (400) zuzüglich einer Endladeleistung des Hilfsenergiespeichers (420) entspricht.

11. Straßennutzfahrzeug (1) nach einem der Ansprüche 1 bis 10, wobei

- das Straßennutzfahrzeug (1) dazu eingerichtet ist, in einem Lademodus ausgehend von der Hochspannungs-Energiequelle (110) eine Leistung in das 48V-Spannungsband einzuspeisen, welche um eine Ladeleistung oberhalb der Leistungsaufnahme des zumindest einen Lüfters liegt um den 48V-Hilfsenergiespeicher (420) mit der Ladeleistung aufzuladen.

12. Straßennutzfahrzeug (1) nach Anspruch 11, wobei

- die Ladeleistung basierend auf einem prognostizierten Energiebedarf der Transportkältemaschine (2) eingestellt wird.

13. Straßennutzfahrzeug (1) nach einem der Ansprüche 1 bis 12, wobei das Straßennutzfahrzeug zumindest einen Anhänger für Straßennutzfahrzeuge umfasst oder ein solcher Anhänger ist.

14. Verfahren zum Betreiben eines Straßennutzfahrzeugs (1), insbesondere nach einem der Ansprüche 1 bis 13, wobei das Straßennutzfahrzeug (1) eine Transportkältemaschine (2) umfasst mit zumindest einen Lüfter (220), wobei der zumindest eine Lüfter (220) dazu eingerichtet ist, in einem 48V-Spannungsband mit elektrischer Energie betrieben zu werden, mit zumindest einer temperaturbeeinflussenden Komponente, eingerichtet zur Temperierung eines Frachtraums des Straßennutzfahrzeugs, wobei die zumindest eine temperaturbeeinflussende Komponente dazu eingerichtet ist, in einem Hochspannungsband mit elektrischer Energie versorgt zu werden, und mit einer Hochspannungs-Energiequelle (110), wobei die Hochspannungs-Energiequelle (110) dazu eingerichtet ist, zumindest eines der zumindest einen temperaturbeeinflussenden Komponente der Transportkältemaschine (1) und des zumindest einen Lüfters (220) mit elektrischer Energie zu versorgen, wo bei das Straßennutzfahrzeug (1) ferner eine 48V-Hilfsenergiequelle (400, 420) umfasst, wobei die 48V-Hilfsenergiequelle (400, 420) dazu eingerichtet ist, in dem 48V-Spannungsband elektrische Energie mit einer Hilfsleistung bereitzustellen, wobei die 48V-Hilfsenergiequelle (400, 420) dazu eingerichtet ist, zumindest einen der zumindest einen Lüfter (220) mit elektrischer Energie zu versorgen, wobei das Verfahren umfasst

- Freihalten der zumindest einen temperaturbeeinflussenden Komponente von einer elektrischen Energieversorgung durch die 48V-Hilfsenergiequelle (400, 420),
- Versorgen, in einem Hilfsbetriebsmodus, zumindest teilweise, zumindest eines der zumindest einen Lüfter ausgehend von der 48V-Hilfsenergiequelle (400, 420) mit elektrischer Energie.

15. Vorrichtung umfassend Mittel eingerichtet zum Steuern und/oder Ausführen eines Verfahrens nach Anspruch 14.

27

Fig.1

Fig.2

EP 4 711 159 A1

Fig.3

Fig.4a

Fig.4b

Fig.5

Europäisches
Patentamt

European
Patent Office

Office européen
des brevets

# EUROPÄISCHER RECHERCHENBERICHT

Nummer der Anmeldung

EP 24 19 9822

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2024/021921 A1 (KOU FANGZHENG [CN]) 18. Januar 2024 (2024-01-18) | 1-7, 11-15 | INV. B60H1/00 |
| Y | * das ganze Dokument * | 8-10 | |
| | ----- | | |
| X | US 2010/263703 A1 (REICHART CHRIS JOHN [US] ET AL) 21. Oktober 2010 (2010-10-21) | 1-7, 11-15 | |
| Y | * das ganze Dokument * | 8-10 | |
| | ----- | | |
| X | US 2012/061152 A1 (REICHART CHRISTOPHER JOHN [US] ET AL) 15. März 2012 (2012-03-15) * das ganze Dokument * | 1-15 | |
| | ----- | | |
| A | CN 104 321 223 A (THERMO KING CORP) 28. Januar 2015 (2015-01-28) * das ganze Dokument * | 1-15 | |
| | ----- | | |
| A | US 2018/094846 A1 (KOELSCH RONALD [US]) 5. April 2018 (2018-04-05) * das ganze Dokument * | 1-15 | |
| | ----- | | |

**RECHERCHIERTE SACHGEBIETE (IPC)**

B60H
F25B

Der vorliegende Recherchenbericht wurde für alle Patentansprüche erstellt

| Recherchenort | Abschlußdatum der Recherche | Prüfer |
|---|---|---|
| München | 10. März 2025 | Beckman, Tycho |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 24 19 9822

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

10-03-2025

| Im Recherchenbericht angeführtes Patentdokument | Datum der Veröffentlichung | Mitglied(er) der Patentfamilie | Datum der Veröffentlichung |
|---|---|---|---|
| US 2024021921 A1 | 18-01-2024 | CN 218215468 U<br>US 2024021921 A1 | 03-01-2023<br>18-01-2024 |
| US 2010263703 A1 | 21-10-2010 | EP 2422424 A1<br>US 2010263703 A1<br>US 2010263708 A1<br>US 2015372533 A1<br>US 2016193975 A1<br>WO 2010123788 A1 | 29-02-2012<br>21-10-2010<br>21-10-2010<br>24-12-2015<br>07-07-2016<br>28-10-2010 |
| US 2012061152 A1 | 15-03-2012 | KEINE | |
| CN 104321223 A | 28-01-2015 | BR 112014023315 A2<br>CN 104321223 A<br>EP 2828123 A1<br>ES 2827798 T3<br>US 2013248165 A1<br>WO 2013142227 A1 | 20-06-2017<br>28-01-2015<br>28-01-2015<br>24-05-2021<br>26-09-2013<br>26-09-2013 |
| US 2018094846 A1 | 05-04-2018 | KEINE | |

EPO FORM P0461

Für nähere Einzelheiten zu diesem Anhang : siehe Amtsblatt des Europäischen Patentamts, Nr.12/82